# EUROPÄISCHE PATENTSCHRIFT

(11) **EP 3 772 162 B1**
(45) Veröffentlichungstag und Bekanntmachung des Hinweises auf die Patenterteilung: **13.12.2023**
(21) Anmeldenummer: 20187900.4
(22) Anmeldetag: 27.07.2020
(51) Int. Cl.: H02K 15/12, B23B 31/40, B23Q 3/12, B23Q 3/14, B23Q 3/155

(54) **E-MASCHINEN-BAUTEIL-SPANNDORN-ÜBERGABESYSTEM**
E-MACHINE COMPONENT MANDREL TRANSFER SYSTEM
SYSTÈME DE TRANSMISSION DE MANDRIN DES COMPOSANTS D'UNE MACHINE ÉLECTRIQUE

(30) Priorität: 31.07.2019 DE 102019120713
(43) Veröffentlichungstag der Anmeldung: 03.02.2021
(73) Patentinhaber: Grob-Werke GmbH & Co. KG, 87719 Mindelheim (DE)
(72) Erfinder: Fischer, Armin, 86470 Thannhausen (DE); Müller, Armin, 86830 Schwabmünchen (DE); Klausner, Michael, 86807 Buchloe (DE); Weber, Christoph, 87600 Kaufbeuren (DE)
(74) Vertreter: KASTEL Patentanwälte PartG mbB

(56) Entgegenhaltungen:
- DE-A1- 2 752 697
- DE-A1-102005 008 892
- DE-B- 1 279 156
- JP-A- S61 244 436
- JP-B2- 4 912 120

## Beschreibung

Die Erfindung betrifft ein E-Maschinen-Bauteil-Spanndorn-Übergabesystem zum rotierenden Übergeben eines Spanndorns, an dem ein E-Maschinen-Bauteil um eine Drehachse rotierend festspannbar ist. Die Erfindung betrifft auch eine Vorrichtung zum Imprägnieren eines E-Maschinen-Bauteils einer elektrischen Maschine mit einem Imprägnierharz, welche das erfindungsgemäße E-Maschinen-Bauteil-Spanndorn-Übergabesystem umfasst.

Spanndorne zum Einspannen von Werkstücken und Werkzeugen sind allgemein bekannt und auf dem Markt in unterschiedlichen Ausführungen erhältlich. Diese weisen in der Regel radial bewegliche Spannelemente zum Einspannen der Werkstücke oder Werkzeuge von innen oder von außen auf. Auf dem Gebiet der Werkzeugmaschinen sind automatische Werkzeugwechsel bekannt. So ist aus der DE 10 2005 008 892 A1 eine Spannvorrichtung zur lösbaren Halterung von Werkzeugen bekannt, die einen automatischen Werkzeugwechselvorgang ermöglicht. Dabei ist allgemein bekannt, radial bewegbare Spannbacken oder Spannzangen durch eine axiale Bewegung einer Stange im Inneren der Spannvorrichtung zu betätigen.

Die DIN ISO 7388 Teil 1, die DIN 2080 und die DIN 69893 sind Industrienormen, gemäß denen Wechselschnittstellen für Werkzeugmaschinen, an denen Spanndorne zum Einspannen von Werkzeugen aufnehmbar sind, genormt sind. Mit der DIN 69893 sind Einzelheiten der HSK-Schnittstelle (Hohlschaftkegel-Schnittstelle) genormt. Aus der DIN IS 7388 Teil 1 ist eine andere genormte Spanndornwechselschnittstelle, nämlich die SK-Schnittstelle (Steilkegel-Schnittstelle) bekannt.

Die JP4912120B2 beschreibt eine sehr kompakt aufbaubare Spindel, bei der leicht die Lebensdauer einer Feder zum Spannen eines Werkzeugs an einem Spanndorn ermittelbar ist. Hierzu werden Stellkräfte und Positionen eines Zylinders der Spindel mittels Sensoren überwacht.

Aus der DE 27 52 697 A1 ist eine Werkzeugmaschine mit zugeordnetem Werkzeugmagazin zur Aufnahme von Werkzeugen bekannt. Die Werkzeugmaschine hat eine Spindel, in der Betätigungsstangen axial beweglich sind.
Die JPS61244436A betrifft Werkstückbearbeitungsmaschinen zur spanenden Bearbeitung von Werkstücken und offenbart ein System zum Übergeben eines Spanndorns, an dem ein Bauteil, wie insbesondere ein Werkzeug, um eine Drehachse rotierend festspannbar ist, umfassend: eine Spindel, welche eine um eine Drehachse mittels eines form- oder reibschlüssigen Antriebsmittels drehend antreibbare Spindelwelle und eine Spanndornwechselschnittstelle aufweist, wobei die Spanndornwechselschnittstelle dazu eingerichtet ist, den Spanndorn aufzunehmen, eine Spanneinheit, welche dazu eingerichtet ist, die Spanndornwechselschnittstelle zu betätigen, eine erste Betätigungseinrichtung, welche dazu eingerichtet ist, einen ersten Zylinder der Spanneinheit axial in der Spindel zu bewegen, wobei durch die axiale Bewegung des ersten Zylinders die Spanneinheit dazu eingerichtet ist, die Spanndornwechselschnittstelle zum Wechseln des in der Spanndornwechselschnittstelle angeordneten Spanndorns zu lösen und dazu eingerichtet ist, die Spanndornwechselschnittstelle zum Spannen des in der Spanndornwechselschnittstelle angeordneten Spanndorns zu spannen, angeordnet ist, und eine an der Spindelwelle angeordnete Schaltscheibe aufweist. Speziell beschreibt die JPS61244436A in den Ausführungsbeispielen eine Spindeleinheit mit einer drehbar angetriebenen Spindelwelle, an der eine Spanndornwechselschnittstelle zur Aufnahme eines Spanndorns zum Einspannen eines Werkzeugs angeordnet ist. Um den Spanndorn zu wechseln, wird die Drehung der Spindelwelle in einer bestimmten Position angehalten und eine innere Stange wird mittels eines Endes einer Kolbenstange eines Kolbens erfasst und gegen die Vorspannung einer Feder axial bewegt, um ein Lösen einzuleiten. Anschließend wird die Spindelwelle um einen bestimmten Winkelgrad gedreht, um eine formschlüssige Bajonettverriegelung zu lösen, um dann den Spanndorn herausziehen zu können. Es ist auch eine herkömmliche Spindeleinheit beschrieben und gezeigt worden, von der die JPS61244436A als Stand der Technik ausgeht. Diese herkömmliche Spindeleinheit umfasst: eine Spindel, welche eine um eine Drehachse mittels eines form- oder reibschlüssigen Antriebsmittels drehend antreibbare Spindelwelle und eine Spanndornwechselschnittstelle an der Spindelwelle aufweist, wobei die Spanndornwechselschnittstelle dazu eingerichtet ist, den Spanndorn aufzunehmen, eine Spanneinheit, welche dazu eingerichtet ist, die Spanndornwechselschnittstelle zu betätigen, und eine erste Betätigungseinrichtung, welche dazu eingerichtet ist, einen ersten Zylinder der Spanneinheit axial in der Spindel zu bewegen, wobei durch die axiale Bewegung des ersten Zylinders die Spanneinheit dazu eingerichtet ist, die Spanndornwechselschnittstelle zum Wechseln des in der Spanndornwechselschnittstelle angeordneten Spanndorns zu lösen und dazu eingerichtet ist, die Spanndornwechselschnittstelle zum Spannen des in der Spanndornwechselschnittstelle angeordneten Spanndorns zu spannen. Die Spanneinheit weist eine in der Spindelwelle axial bewegliche Stange, an deren Ende eine Kupplung zum Einspannen des Spanndorns vorgesehen ist, und eine Feder zum Vorspannen der Spanneinheit in eine Spannstellung, in der der Spanndorn festgespannt ist, auf. Um einen Werkzeugwechsel vorzunehmen, wird die Drehung der Spindel angehalten. Die Stirnfläche eines in einem Führungselement verschiebbar geführten und an dem Zylinder damit mitbeweglich befestigten Stangenendes kontaktiert vollflächig die Stirnfläche des Endes der axial beweglichen Stange der Spindelwelle, so dass bei Bewegung des Zylinders die Stange entgegen der Vorspannkraft der Feder bewegt wird, um die Spanneinheit in eine Freigabestellung zum Lösen des Spanndorns axial zu verschieben. Es wird darauf hingewiesen, dass bei dieser früheren Lösung Lager zum Drehlagern der Spindelwelle bereits bei den auftretenden stationären axialen Kräften stark belastet werden und häufig ausgetauscht werden müssen, weswegen die oben beschriebene weitere Lösung zum Wechsel des Spanndorns vorgeschlagen wird.

Im Gegensatz dazu liegt die Erfindung auf dem Gebiet der Herstellung von E-Maschinen-Bauteilen, d.h. Bauteilen von elektrischen Maschinen (kurz E-Maschinen). Unter den Begriff elektrische Maschinen oder kurz E-Maschinen fallen Elektromotoren und Generatoren. Unter E-Maschinen-Bauteilen sind insbesondere Statoren und Rotoren von Elektromotoren und Generatoren oder sonstige Bauteile von Elektromotoren oder Generatoren zu verstehen, die im Verlauf der Herstellung mit einem Harz oder dergleichen zu Imprägnieren sind. In der DE 1 279 156 A wird das Träufelverfahren als sehr vorteilhaft doch sehr schwer automatisierbar beschrieben. Um dem zu begegnen schlägt die DE 1 279 156 A eine Imprägniervorrichtung zum Imprägnieren von elektrischen Wicklungen mit einem Harz-Härter-Gemisch mit einer schrittweise vorwärts bewegbaren Fördereinrichtung mit Haltern für die Wicklungen und einer Einrichtung zum Aufgießen eines Gemischs aus Harz und Härter vor, wobei die Halter so ausgebildet und an der Fördereinrichtung gelagert sind, dass die Wicklungen zumindest am Aufgießplatz in eine Schräglage neigbar und gleichzeitig um ihre Längsachsen drehbar sind.

Bei einem Imprägnier- und/oder Geliervorgang eines Stators stellt eine zentrale Herausforderung das Handling der Statoren während des Imprägnierens und/oder des Gelierens dar. Während des Imprägnierens und/oder des Gelierens müssen die Statoren gleichmäßig rotierend zwischen diesen Fertigungsschritten übergeben werden, um das Ausfließen oder die ungleichmäßige Verteilung flüssigen Harzes zu verhindern.

Die Erfindung hat sich zur Aufgabe gestellt, ein E-Maschinen-Bauteil-Spanndorn-Übergabesystem sowie eine E-Maschinen-Bauteil-Imprägniervorrichtung zum Imprägnieren eines E-Maschinen-Bauteils einer elektrischen Maschine, welche ein solches E-Maschinen-Bauteil-Spanndorn-Übergabesystem umfasst, derart zu verbessern, dass dieses oder diese konstruktiv besonders einfach und flexibel aufgebaut und mittels welchem oder welcher zugleich das E-Maschinen-Bauteil gleichmäßig mit dem Imprägnierharz beschichtbar ist.

Zum Lösen dieser Aufgabe schafft die Erfindung ein E-Maschinen-Bauteil-Spanndorn-Übergabesystem zum rotierenden Übergeben eines Spanndorns und eine E-Maschinen-Bauteil-Imprägniervorrichtung zum Imprägnieren eines E-Maschinen-Bauteils einer elektrischen Maschine mit einem Imprägnierharz mit den Merkmalen des unabhängigen Anspruchs 1 bzw. des Anspruchs 14. Vorteilhafte Ausgestaltungen mit zweckmäßigen und nicht trivialen Weiterbildungen der Erfindung sind in den abhängigen Patentansprüchen angegeben.

Die Erfindung schafft ein E-Maschinen-Bauteil-Spanndorn-Übergabesystem zum rotierenden Übergeben eines Spanndorns, an dem ein E-Maschinen-Bauteil um eine Drehachse rotierend festspannbar ist. Mit anderen Worten ist das E-Maschinen-Bauteil-Spanndorn-Übergabesystem dazu eingerichtet, einen Spanndorn, an dem ein E-Maschinen-Bauteil angeordnet oder gespannt ist, wobei das E-Maschinen-Bauteil an dem Spanndorn rotierbar gehalten ist, zusammen mit dem Spanndorn, während einer Drehbewegung zu übergeben oder abzulegen. Mit "Spanndorn" ist insbesondere ein Spannmittel gemeint, welches Drehbewegungen und/oder -momente auf ein eingespanntes Werkzeug oder Werkstück oder E-Maschinen-Bauteil weiterleitet. Bei dem E-Maschinen-Bauteil handelt es sich bevorzugt um einen Stator. Mit "rotierend festspannbar" ist gemeint, dass das E-Maschinen-Bauteil an dem Spanndorn gehalten ist und zusammen mit dem Spanndorn rotierbar oder drehbar ist.

Das E-Maschinen-Bauteil-Spanndorn-Übergabesystem umfasst eine Spindel, welche eine Spanndornwechselschnittstelle aufweist, wobei die Spanndornwechselschnittstelle dazu eingerichtet ist, den Spanndorn aufzunehmen. Mit "Spindel" ist insbesondere eine Maschine gemeint, welche eine Drehachse aufweist und dazu eingerichtet ist, den Spanndorn aufzunehmen oder zu halten oder zu lagern. Mit "Spanndornwechselschnittstelle" ist insbesondere ein Bereich oder ein Teil der Spindel gemeint, welcher dazu eingerichtet ist, den Spanndorn zu spannen und/oder zu lösen. Insbesondere wird der Spanndorn über die Spanndornwechselschnittstelle in die Spindel eingeführt und fixiert oder gelöst und aus der Spindel herausgeführt. Die Spanndornwechselschnittstelle ist insbesondere als eine HSK-Schnittstelle, bevorzugt als eine modifizierte HSK-Schnittstelle, ausgebildet. Mit "HSK-Schnittstelle" ist eine Hohlschaftkegel-Schnittstelle wie in DIN 69893 normiert gemeint. Besonders bevorzugt ist die Spanndornwechselschnittstelle derart modifiziert, dass die Drehmomentübertragung ausschließlich über die Plananlagenfläche der HSK-Schnittstelle erfolgt. Insbesondere ergibt sich eine bevorzugte modifizierte HSK-Schnittstelle dadurch, dass bei einer HSK-Schnittstelle der Kegelkonus abgeschnitten oder sonst wie weggelassen wurde und die Mitnehmernuten entfernt oder sonst wie weggelassen wurden. Dies ermöglicht, die Einspannung trotz erheblicher Temperaturunterschiede, die bei einem Imprägnierverfahren auftreten, sicher durchzuführen.

Ferner umfasst das E-Maschinen-Bauteil-Spanndorn-Übergabesystem eine Spanneinheit, welche dazu eingerichtet ist, die Spanndornwechselschnittstelle zu betätigen. Mit "Betätigen" ist insbesondere gemeint, dass die Spanndornwechselschnittstelle gespannt wird, um den Spanndorn zu halten oder zu fixieren, oder gelöst wird, insbesondere für den Spanndorn geöffnet wird, um den Spanndorn in der Spindel anzuordnen oder wieder aus der Spindel zu lösen.

Des Weiteren weist das E-Maschinen-Bauteil-Spanndorn-Übergabesystem eine erste Betätigungseinrichtung auf, welche dazu eingerichtet ist, einen ersten Zylinder der Spanneinheit axial in der Spindel zu bewegen. Mit anderen Worten kann die erste Betätigungseinrichtung dazu eingerichtet sein, den ersten Zylinder innerhalb der Spindel in eine Haupterstreckungsrichtung linear zu verschieben oder zu verlagern. Mit anderen Worten kann der erste Zylinder in der Spindel durch die erste Betätigungseinrichtung vor und zurückgeschoben werden. Bevorzugt wird der erste Zylinder von einer Seite, insbesondere durch die erste Betätigungseinrichtung, mit einem Druck oder einer Druckkraft beaufschlagt, wodurch der erste Zylinder axial in der Spindel bewegt wird. Mit "axial" ist insbesondere entlang einer Haupterstreckungsrichtung oder einer Drehachse der Spindel gemeint. Durch die Bewegung des Zylinders erfolgt bevorzugt ein Zylinderhub. Zum Bewegen des ersten Zylinders wird die erste Betätigungseinrichtung bevorzugt durch eine Steuereinrichtung angesteuert.

Durch die axiale Bewegung des ersten Zylinders ist die Spanneinheit dazu eingerichtet, die Spanndornwechselschnittstelle zum Wechseln des in der Spanndornwechselschnittstelle angeordneten Spanndorns zu lösen und dazu eingerichtet, die Spanndornwechselschnittstelle zum Spannen des in der Spanndornwechselschnittstelle angeordneten Spanndorns zu spannen. Mit anderen Worten führt die axiale Bewegung des ersten Zylinders zu einer Betätigung der Spanndornwechselschnittstelle. Im gelösten Zustand der Spanndornwechselschnittstelle kann der Spanndorn gewech-I selt werden. Im gespannten Zustand der Spanndornwechselschnittstelle kann der Spanndorn der Spindel fixiert oder gehalten werden.

Ferner weist die Spanneinheit ein erstes Koppelelement, welches an dem ersten Zylinder angeordnet ist, und eine Schaltscheibe auf, wobei das erste Koppelelement zum Lösen und zum Spannen der Spanndornwechselschnittstelle mit der Schaltscheibe zusammenwirkt. Mit anderen Worten können die Schaltscheibe und das erste Koppelelement zum Betätigen der Spanndornwechselschnittstelle miteinander interagieren. Mit anderen Worten kann eine Betätigung über den ersten Zylinder und somit der Spanndornwechselschnittstelle über ein auf den ersten Zylinder einwirkendes erstes Koppelelement, während einer Rotation, erfolgen. Hierdurch wird ein rotierender Wechsel des Spanndorns ermöglicht. Die Schaltscheibe ist insbesondere als eine ringförmige Scheibe ausgebildet.

Das erste Koppelelement ist als ein Lager ausgebildet. Besonders bevorzugt ist das erste Koppelelement als ein Axial-Nadellager oder ein Gleitlager ausgebildet.

Dadurch ergibt sich der Vorteil, dass Spanndorne mit auf ihnen gespannten E-Maschinen-Bauteilen mittels eines flexiblen Handlingssystems taktzeitvariabel, insbesondere durch eine Anlage, transportiert werden. Dies ermöglicht die zeitparallele Fertigung mehrerer unterschiedlicher E-Maschinen-Bauteile, wie zum Beispiel unterschiedliche Statortypen, da sie zeitflexibel, zum Beispiel früher aus einem Gelierofen, geholt werden können. Durch eine Funktionstrennung in rotierende Teile für eine Spanndornrotation und stehende Teile für die Betätigung der Spanndornwechselschnittstelle kann ein sicherer Spannzustand des Spanndorns abgefragt werden. Aufgrund der kompakten und modularen Bauweise kann das E-Maschinen-Bauteil-Spanndorn-Übergabesystem optional mehrmals nebeneinander auf einem Handlingssystem angebracht werden.

Die Spanneinheit umfasst einen Einbauspanner, wobei bei der axialen Bewegung des ersten Zylinders die Schaltscheibe, welche an dem Einbauspanner angeordnet ist, auf ein Federelement des Einbauspanners zum Lösen und/oder zum Spannen der Spanndornwechselschnittstelle einwirkt. Durch das Zusammenwirken von erstem Zylinder, Schaltscheibe, erstem Koppelelement und Einbauspanner kann die Spanndornwechselschnittstelle besonders einfach und zuverlässig betätigt werden.

In vorteilhafter Weise ist das erste Koppelelement bei der axialen Bewegung des ersten Zylinders in Richtung der Spanndornwechselschnittstelle von einer Spanndornspannposition in eine Spanndornwechselposition zum Lösen der Spanndornwechselschnittstelle auf der Schaltscheibe anordenbar. Die Betätigung über den ersten Zylinder und somit der Spanndornwechselschnittstelle erfolgt bevorzugt über das auf den ersten Zylinder aufgesetzte erste Koppelelement, welches eine axiale Betätigungskraft vom stehenden Zylinder auf die Schaltscheibe überträgt. Hierdurch ist das erste Koppelelement dazu eingerichtet, ein Federelement des Einbauspanners zu spannen, um die Spanndornwechselschnittstelle zu lösen. Zum Lösen der Spanndornwechselschnittstelle fährt durch die axiale Bewegung des ersten Zylinders, also den Zylinderhub des ersten Zylinders, in Richtung der Spanndornwechselschnittstelle das auf dem ersten Zylinder angebrachte erste Koppelelement auf die am, insbesondere rotierenden, Einbauspanner montierte oder angeordnete Schaltscheibe auf und löst so das Federelement, insbesondere ein Federpaket, des Einbauspanners. Hierdurch kann die Spanndornwechselschnittstelle gelöst werden. Der Spanndorn kann gewechselt, also aus der Spindel entnommen und/oder in die Spindel eingeführt, werden. Insbesondere ist in der Spanndornspannposition das Federelement des Einbauspanners entspannt und der Spanndorn in der Spanndornwechselschnittstelle gehalten. Insbesondere ist in der Spanndornwechselposition das Federelement des Einbauspanners gespannt und der Spanndorn kann aus der Spanndornwechselschnittstelle gelöst oder entnommen werden.

Bei einer Ausgestaltung ist das beispielsweise als Feder ausgebildete Federelement immer, jedoch unterschiedlich stark, gespannt, also einer Spannkraft unterworfen, die in den unterschiedlichen Positionen unterschiedlich stark ist. In der Spanndornspannposition ist das Federelement entspannter als in der Spanndornwechselposition.

Das Lösen der Spanndornwechselschnittstelle erfolgt besonders bevorzugt entgegen einer Federspannung. Hierbei wird insbesondere eine Hohlstange der Spindel, die eine Druckstange des Spannmoduls des Spanndorns umgibt, gegen die Kraft der Feder in Richtung der Spanndornwechselschnittstelle bewegt, um die Spannsegmente zu bewegen und damit die Spanndornwechselschnittstelle, bevorzugt einen Hohlschaftkegel, zu lösen.

Gemäß einer vorteilhaften Weiterbildung ist es vorgesehen, dass das erste Koppelelement bei der axialen Bewegung des ersten Zylinders von der Spanndornwechselschnittstelle weg von der Spanndornwechselposition in die Spanndornspannposition zum Spannen der Spanndornwechselschnittstelle von der Schaltscheibe abhebbar ist, wodurch das Federelement des Einbauspanners dazu eingerichtet ist, eine Kraft zum Spannen der Spanndornwechselschnittstelle auf die Spanndornwechselschnittstelle auszuüben. Zum Spannen der Spanndornwechselschnittstelle wird der erste Zylinder axial, insbesondere von der Spanndornwechselschnittstelle weg, bewegt. Dabei bewirkt das Federelement, insbesondere das Federpaket, im Einbauspanner eine auf die Spanndornwechselschnittstelle wirkende Spannkraft. Damit kann der Spanndorn gespannt werden. Dabei ist das erste Koppelelement von der Schaltscheibe abgehoben oder gelöst oder entfernt. Mit anderen Worten ist das erste Koppelelement von der Schaltscheibe gelöst, insbesondere nicht mehr auf oder an der Schaltscheibe angeordnet.

Besonders bevorzugt ist in der Spanndornspannposition des ersten Zylinders, insbesondere während einer Rotation, der erste Zylinder von einer Gegenlauffläche des ersten Koppelelements abgehoben. Beispielsweise ist der erste Zylinder der Spanndornwechselschnittstelle von der Gegenlauffläche des Axial-Nadellagers, welches insbesondere das erste Koppelelement bildet, im gespannten Zustand abgehoben. Hierdurch können Geräuschemissionen und Verschleiß während der Rotation reduziert oder gar vermieden werden.

Eine erfindungsgemässe Alternative sieht vor, dass die Schaltscheibe an einer Spindelwelle der Spindel angeordnet ist, wobei ein formschlüssiges Antriebsmittel zum Drehen der Spindelwelle bei einer Betätigung der Spanndornwechselschnittstelle vorgesehen ist. Mit anderen Worten ist das formschlüssige Antriebsmittel dazu eingerichtet, die Spindelwelle bei einer Betätigung der Spanndornwechselschnittstelle zu rotieren oder zu drehen. Das formschlüssige Antriebsmittel kann bevorzugt als ein Zahnriemen ausgebildet sein.

Eine andere erfindungsgemässe Alternative sieht vor, dass die Schaltscheibe an einer Spindelwelle der Spindel angeordnet ist, wobei ein reibschlüssiges Antriebsmittel zum Drehen der Spindelwelle bei einer Betätigung der Spanndornwechselschnittstelle vorgesehen ist. Mit anderen Worten ist das reibschlüssige Antriebsmittel dazu eingerichtet, die Spindelwelle bei einer Betätigung der Spanndornwechselschnittstelle zu rotieren oder zu drehen. Das reibschlüssige Antriebsmittel kann bevorzugt als ein Flachriemen ausgebildet sein.

Eine vorteilhafte Weiterbildung sieht vor, dass das E-Maschinen-Bauteil-Spanndorn-Übergabesystem eine erste Erfassungseinrichtung aufweist, welche einen Sensor umfasst, welcher dazu eingerichtet ist, eine Position der Schaltscheibe zu erfassen. Mit anderen Worten kann die Erfassungseinrichtung einen Sensor aufweisen, welcher dazu eingerichtet ist, eine Position der Schaltscheibe abzufragen. Mit anderen Worten kann der Sensor dazu eingerichtet sein, einen Spannzustand, insbesondere der Spanndornwechselschnittstelle, zu erfassen. Ist beispielsweise das erste Koppelelement an der Schaltscheibe angeordnet, so kann der Sensor eine "Gelöst-Position" erfassen. Ist beispielsweise das erste Koppelelement von der Schaltscheibe gelöst, so kann der Sensor eine "Gespannt-mit-Spanndorn-Position" oder eine "Gespannt-ohne-Spanndorn-Position" abfragen.

In vorteilhafter Weise ist die Erfassungseinrichtung dazu eingerichtet, eine Spannposition, insbesondere eine IST-Spannposition, des Einbauspanners zu erfassen oder abzufragen.

Zusätzlich oder alternativ ist es vorgesehen, dass die Erfassungseinrichtung einen Schalter aufweist, wobei der Schalter dazu eingerichtet ist, eine Position des ersten Zylinders, insbesondere in der Spanndornwechselposition und/oder in der Spanndornspannposition, zu erfassen. Insbesondere ist der Schalter dazu eingerichtet, die Position des ersten Zylinders, in der das erste Koppelelement von der Schaltscheibe abgehoben ist, zu erkennen. Bevorzugt ist der Schalter als ein Näherungsschalter oder ein Näherungssensor ausgebildet. Mit "Näherungsschalter", welcher auch als Näherungsinitiator, Annäherungsschalter oder Annäherungssensor bezeichnet werden kann, ist insbesondere ein Sensor gemeint, der auf eine Annäherung, das heißt ohne direkten Kontakt berührungsfrei reagiert.

Eine weitere vorteilhafte Ausführungsform sieht vor, dass die Spanneinheit ferner dazu eingerichtet ist, ein Spannmodul des Spanndorns zum Koppeln oder Entkoppeln eines E-Maschinen-Bauteils mit dem Spanndorn zu betätigen. Mit "Betätigen" ist insbesondere gemeint, dass das Spannmodul ausgedehnt zum Spannen oder zusammengezogen zum Entspannen wird. Insbesondere ist das Spannmodul dazu eingerichtet, ein E-Maschinen-Bauteil an dem Spanndorn zu fixieren oder an dem Spanndorn zu halten. Bevorzugt ist das Spannmodul an einem vorbestimmten Bereich, insbesondere außerhalb der Spindel, an dem Spanndorn angeordnet. Im gespannten Zustand ist das E-Maschinen-Bauteil bevorzugt mittels des Spannmoduls an dem Spanndorn gehalten. Im gelösten oder gelockerten Zustand ist das E-Maschinen-Bauteil bevorzugt von dem Spannmodul und/oder dem Spanndorn entkoppelt. Das E-Maschinen-Bauteil-Spanndorn-Übergabesystem umfasst eine zweite Betätigungseinrichtung, welche dazu eingerichtet ist, einen zweiten Zylinder axial in der Spindel zum Betätigen des Spannmoduls des Spanndorns zu bewegen, wobei durch die axiale Bewegung des zweiten Zylinders der zweite Zylinder mit einem zweiten Koppelelement zum Spannen und/oder Lösen des Spannmoduls des Spanndorns zusammenwirkt. Mit anderen Worten kann die zweite Betätigungseinrichtung dazu eingerichtet sein, den zweiten Zylinder innerhalb der Spindel axial in eine Haupterstreckungsrichtung des E-Maschinen-Bauteil-Spanndorn-Übergabesystems oder der Spindel linear zu verschieben oder zu verlagern. Mit anderen Worten kann der zweite Zylinder in der Spindel durch die zweite Betätigungseinrichtung vor und zurückgeschoben werden. Bevorzugt wird der zweite Zylinder von einer Seite, insbesondere durch die zweite Betätigungseinrichtung, mit einem Druck oder einer Kraft, insbesondere einer Druckkraft, beaufschlagt, wodurch der zweite Zylinder axial in der Spindel bewegt wird. Durch die Bewegung des zweiten Zylinders erfolgt bevorzugt ein Zylinderhub. Zum Bewegen des zweiten Zylinders kann die zweite Betätigungseinrichtung bevorzugt durch eine Steuereinrichtung des E-Maschinen-Bauteil-Spanndorn-Übergabesystems angesteuert werden. Zum Spannen und/oder Lösen des Spannmoduls des Spanndorns interagiert der zweite Zylinder bevorzugt mit einem zweiten Koppelelement. Bevorzugt ist der erste Zylinder zwischen der Spanndornwechselschnittstelle und dem zweiten Zylinder angeordnet. Bevorzugt ist das zweite Koppelement als eine Druckstange ausgebildet. Insbesondere verläuft das zweite Koppelement zentrisch durch die Spanndornwechselschnittstelle.

Gemäß einer weiteren vorteilhaften Weiterbildung ist es vorgesehen, dass die Spanneinheit einen Rückhalt aufweist, welcher dazu eingerichtet ist, das zweite Koppelelement zu lagern, wobei der Rückhalt eine Schraube umfasst, wobei bei der axialen Bewegung des zweiten Zylinders in Richtung der Spanndornwechselschnittstelle von einer Spannmodulspannposition in eine Spannmodulwechselposition zum Lösen des Spannmoduls zum Entkoppeln des E-Maschinen-Bauteils der zweite Zylinder mit der Schraube koppelbar ist, wodurch das zweite Koppelelement dazu eingerichtet ist, ein zweites Federelement, welches dazu eingerichtet ist, das Spannmodul zu spannen, zu lösen. Der zweite Zylinder wird insbesondere mit einem Druck beaufschlagt und fährt dadurch auf die Schraube für eine Federvorspannung des Rückhalts, insbesondere Druckstangenrückhalts, und betätigt so das zweite Koppelelement. Das zweite Koppelelement betätigt hierdurch insbesondere wiederum ein Federelement, insbesondere ein Federpaket, im Spannmodul des Spanndorn und löst so das E-Maschinen-Bauteil von dem Spanndorn.

In vorteilhafter Weise weist die Spanneinheit ferner eine Druckfeder auf, welche dazu eingerichtet ist, das zweite Koppelement bei der axialen Bewegung des zweiten Zylinders von der Spanndornwechselschnittstelle weg von der Spannmodulwechselposition in die Spannmodulspannposition axial in die Bewegungsrichtung des zweiten Zylinders zu bewegen, um das Spannmodul zum Koppeln des E-Maschinen-Bauteils mit dem Spanndorn zu spannen. Besonders bevorzugt ist die Druckfeder an einem Joch, in welchem das zweite Koppelelement zumindest teilweise, also vollständig oder teilweise, aufgenommen ist, angeordnet. Bevorzugt wird der zweite Zylinder mit einem Druck beaufschlagt und fährt in eine hintere Endlage, insbesondere in die Spannmodulspannposition. Hierdurch bewirkt das Federelement, insbesondere das Federpaket, im Spannmodul des Spanndorns eine auf das E-Maschinen-Bauteil wirkende Spannkraft. Hierdurch kann das E-Maschinen-Bauteil gespannt werden. Das zweite Koppelelement, also die Druckstange, kann über die Druckfeder, welche auf einem mitrotierenden Joch montiert ist, in die Spindel gezogen werden.

Besonders bevorzugt ist in der Spannmodulspannposition des zweiten Zylinders, insbesondere während einer Rotation, der zweite Zylinder von einer Gegenlauffläche des zweiten Koppelelements abgehoben. Beispielsweise ist der zweite Zylinder von der Gegenlauffläche der Druckstange, welche insbesondere das zweite Koppelelement bildet, im gespannten Zustand abgehoben. Hierdurch können Geräuschemissionen und Verschleiß während der Rotation reduziert oder gar vermieden werden.

Gemäß einer vorteilhaften Weiterbildung ist es vorgesehen, dass das E-Maschinen-Bauteil-Spanndorn-Übergabesystem eine zweite Erfassungseinrichtung aufweist, welche einen zweiten Schalter umfasst, wobei der zweite Schalter dazu eingerichtet ist, eine Position des zweiten Zylinders, insbesondere in der Spannmodulspannposition und/oder der Spannmodulwechselposition, zu erfassen. Bevorzugt ist der zweite Schalter als ein Näherungsschalter ausgebildet. Bevorzugt erkennt der Näherungsschalter die hintere Endlage des zweiten Zylinders, also wenn sich der zweite Zylinder in der Spanndornspannposition befindet, in der der zweite Zylinder von einem rotierenden Teil der Spindel abgehoben ist. Mit anderen Worten kann der zweite Schalter dazu eingerichtet sein, einen Spannzustand des Spannmoduls zu erfassen oder zu ermitteln oder zu erkennen. Besonders bevorzugt ist der zweite Schalter dazu eingerichtet, den Spannzustand in der hinteren Endlage von dem zweiten Zylinder zu ermitteln.

Zusätzlich oder alternativ umfasst die zweite Erfassungseinrichtung einen zweiten Sensor, wobei der zweite Sensor dazu eingerichtet ist, eine Winkelposition des mit dem Spanndorn gekoppelten E-Maschinen-Bauteils, insbesondere durch ein Erfassen eines Schaltelements des E-Maschinen-Bauteils, zu bestimmen. Mit anderen Worten kann ein über der Spindel angebrachter Sensor die Detektion des umlaufenden Schaltelements des E-Maschinen-Bauteils ermöglichen.

Eine besonders bevorzugte Ausführungsform sieht vor, dass die Spanneinheit ein an dem zweiten Zylinder angeordnetes zweites Lager umfasst, wobei bei einer Betätigung des Spannmoduls das zweite Koppelelement mittels des zweiten Lagers rotierbar ist. Das zweite Lager ist bevorzugt als ein Axial-Nadellager oder als ein Gleitlager ausgebildet.

Zu der Erfindung gehört auch eine E-Maschinen-Bauteil-Imprägniervorrichtung zum Imprägnieren eines E-Maschinen-Bauteils einer elektrischen Maschine mit einem Imprägnierharz, welche das erfindungsgemäße E-Maschinen-Bauteil-Spanndorn-Übergabesystem umfasst.

Zu der Erfindung gehören auch Weiterbildungen der E-Maschinen-Bauteil-Imprägniervorrichtung, die Merkmale aufweisen, wie sie bereits im Zusammenhang mit den Weiterbildungen des erfindungsgemäßen E-Maschinen-Bauteil-Spanndorn-Übergabesystems beschrieben worden sind. Aus diesem Grund sind die entsprechenden Weiterbildungen der erfindungsgemäßen E-Maschinen-Bauteil-Imprägniervorrichtung hier nicht noch einmal beschrieben.

Ein Ausführungsbeispiel wird im Folgenden anhand der beigefügten Zeichnungen näher erläutert. Darin zeigt:
Fig. 1 eine schematische Darstellung eines Handlingprozesses zum Imprägnieren und/oder Gelieren von E-Maschinen-Bauteilen;
Fig. 2 eine schematische Darstellung einer Spindel mit einer Spanndornwechselschnittstelle und einem Mechanismus zum Betätigen der Spanndornwechselschnittstelle und eines Spannmoduls in einer Schnittansicht;
Fig. 3 eine schematische Darstellung eines vergrößerten Ausschnitts der Spindel von Fig. 2 mit einem ersten Zylinder, einem ersten Koppelelement, einem Joch, einer Druckfeder, einer Schaltscheibe, einer Spindelwelle und einem Einbauspanner in einer Schnittansicht;
Fig. 4 eine weitere schematische Darstellung einer Spindel mit der Spanndornwechselschnittstelle und dem Mechanismus zum Betätigen der Spanndornwechselschnittstelle und des Spannmoduls in einer Schnittansicht;
Fig. 5 eine schematische Darstellung eines vergrößerten Ausschnitts der Spindel von Fig. 4 mit der Schaltscheibe und einem ersten Sensor, welcher dazu eingerichtet ist, eine Position der Schaltscheibe zu erfassen, in einer Schnittansicht;
Fig. 6 eine schematische Darstellung eines weiteren vergrößerten Ausschnitts der Spindel von Fig. 4 mit dem ersten Koppelelement und einem ersten Schalter, welcher dazu eingerichtet ist, eine Position des ersten Zylinders zu erfassen, in einer Schnittansicht;
Fig. 7 eine schematische Darstellung eines E-Maschinen-Bauteil-Spanndorn-Übergabesystems mit der Spindel, einem in der Spindel angeordneten Spanndorn und einem an dem Spanndorn angeordneten Spannmodul in einer Schnittansicht;
Fig. 8 eine schematische Darstellung des E-Maschinen-Bauteil-Spanndorn-Übergabesystems von Fig. 7 in einer Perspektivansicht; und
Fig. 9 eine schematische Darstellung eines Greifersystems mit drei daran angeordneten E-Maschinen-Bauteil-Spanndorn-Übergabesystemen in einer Perspektivansicht.

Bei den im Folgenden erläuterten Ausführungsbeispielen handelt es sich um bevorzugte Ausführungsformen der Erfindung.

In den Figuren sind gleiche und funktionsgleiche Elemente mit dem gleichen Bezugszeichen versehen.

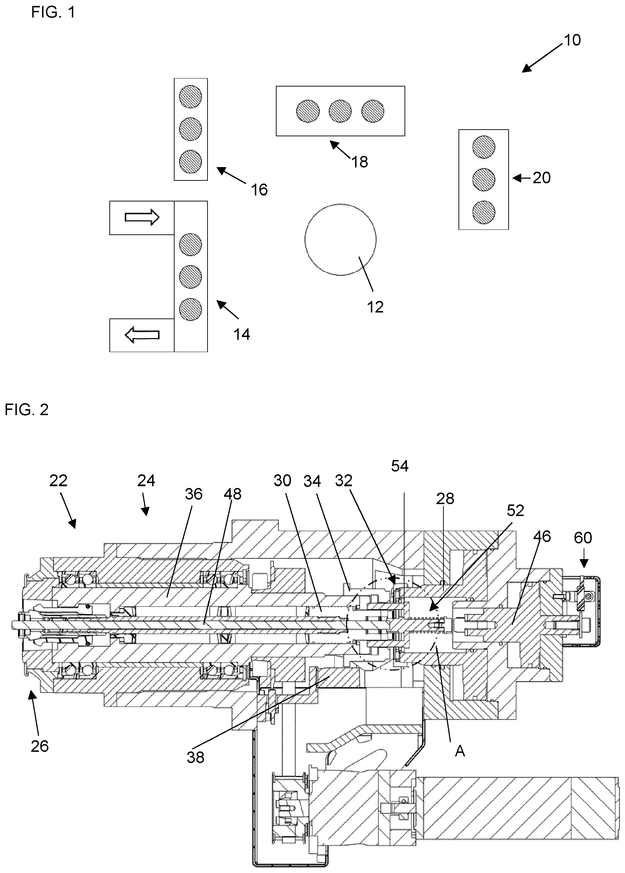

Fig. 1 zeigt in einer schematischen Darstellung eine E-Maschinen-Bauteil-Imprägniervorrichtung 10 zum Imprägnieren und/oder Gelieren von E-Maschinen-Bauteilen. Bei den E-Maschinen-Bauteilen handelt es sich bevorzugt um Statoren. Bei einigen Ausführungsformen können die E-Maschinen-Bauteile aber auch andere Bauteile einer elektrischen Maschine sein, wie z.B. Rotoren, die im Verlauf ihrer Herstellung mit Harz zu versehen sind. Die E-Maschinen-Bauteil-Imprägniervorrichtung 10 kann auch als Imprägnier- und/oder Gelieranlage bezeichnet werden.

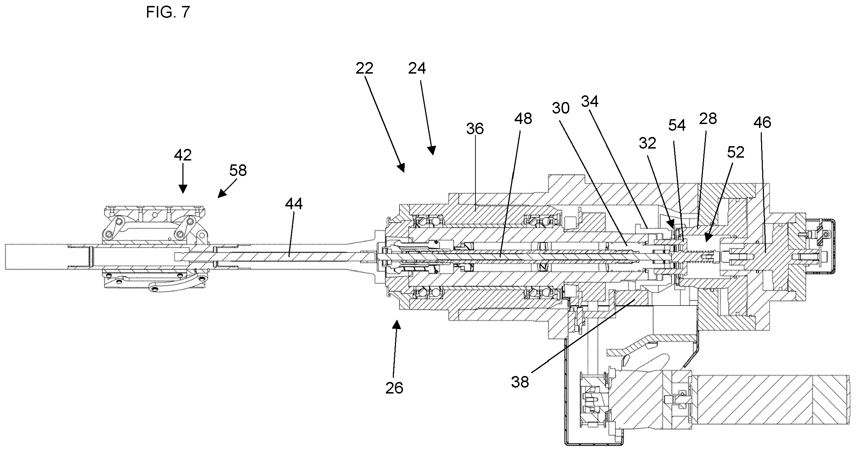

Die E-Maschinen-Bauteil-Imprägniervorrichtung 10 umfasst ein Greifersystem 12 mit einem E-Maschinen-Bauteil-Spanndorn-Übergabesystem, welches im Zusammenhang von den Figuren Fig. 2 bis Fig. 7 genauer erläutert wird, ein Band 14, einen Puffer 16, eine Träufelzelle 18 und einen Ofen 20. Das Greifersystem 12 ist insbesondere flexibel, also beweglich, ausgestaltet. Das Greifersystem 12 ist dazu eingerichtet, insbesondere mittels des E-Maschinen-Bauteil-Spanndorn-Übergabesystems, einen Spanndorn aus dem Puffer 16 zu holen oder daraus aufzunehmen oder daraus zugreifen. Mit "Puffer" ist insbesondere eine Aufnahmevorrichtung oder ein Lager oder ein Magazin gemeint. Zum Aufnehmen eines oder mehrerer Spanndorne umfasst das E-Maschinen-Bauteil-Spanndorn-Übergabesystem eine oder mehrere Spindeln. Zur Aufnahme der Spanndornen ist eine Spanndornwechselschnittstelle der Spindel oder der mehreren Spindeln zu betätigen. Die Spindel ist dazu eingerichtet, einen Spanndorn aufzunehmen und/oder zu lagern oder zu halten. Das E-Maschinen-Bauteil-Spanndorn-Übergabesystem kann mehrere Spindeln aufweisen, wobei jede Spindel dazu eingerichtet ist, jeweils einen Spanndorn aufzunehmen oder zu halten.

Nachdem ein Spanndorn aus dem Puffer 16 durch das Greifersystem 12 aufgenommen wurde, ist das Greifersystem 12 dazu eingerichtet, die E-Maschinen-Bauteile, insbesondere die Statoren, von dem Band 14 zu nehmen. Wenn das E-Maschinen-Bauteil-Spanndorn-Übergabesystem 12 mehrere Spindeln aufweist, so kann das E-Maschinen-Bauteil-Spanndorn-Übergabesystem 12 dazu eingerichtet sein, pro Spindel ein E-Maschinen-Bauteil, insbesondere mittels des Spanndorns, aufzunehmen. Zum Aufnehmen oder Koppeln eines E-Maschinen-Bauteils mit dem Spanndorn weist das E-Maschinen-Bauteil-Spanndorn-Übergabesystem 12 ein Spannmodul auf, welches an dem Spanndorn angeordnet ist. Da als E-Maschinen-Bauteil insbesondere ein Stator aufgenommen wird, kann das Spannmodul auch als Statorspannmodul bezeichnet werden. Zum Aufnehmen oder Koppeln des E-Maschinen-Bauteils an dem Spanndorn ist das Spannmodul zu betätigen. In einem betätigten Zustand fährt der Spanndorn in das E-Maschinen-Bauteil, also insbesondere in den Stator, ein. Durch eine Wegnahme der Betätigung des Spannmoduls im oder am Spanndorn wird das E-Maschinen-Bauteil, also insbesondere der Stator, auf dem Spanndorn gespannt.

In einem weiteren Arbeitsschritt transportiert das Greifersystem 12 das an dem Spanndorn gespannte E-Maschinen-Bauteil, insbesondere das Spanndorn-E-Maschinen-Bauteil-Paket, besonders bevorzugt das Spanndorn-Stator-Paket, in die Träufelzelle 18. Da das E-Maschinen-Bauteil an dem Spanndorn mittels des Spannmoduls gekoppelt ist, kann das Paket auch als Spanndorn-E-Maschinen-Bauteil-Paket bezeichnet werden. Da insbesondere als E-Maschinen-Bauteil ein Stator an dem Spanndorn mittels Spannmoduls gekoppelt ist, kann das Paket auch als Spanndorn-Stator-Paket bezeichnet werden. Das E-Maschinen-Bauteil-Spanndorn-Übergabesystem ist dazu eingerichtet, das gesamte Paket, also den Spanndorn mit dem daran angeordneten E-Maschinen-Bauteil, insbesondere das Spanndorn-Stator-Paket, an oder in die Träufelzelle 18 zu übergeben. Die Träufelzelle 18 ist dazu eingerichtet, das E-Maschinen-Bauteil, insbesondere den Stator, mit einem Harz, insbesondere einem Imprägnierharz, zu beträufeln oder zu imprägnieren oder zu beschichten. Damit der Spanndorn zusammen mit dem E-Maschinen-Bauteil in der Träufelzelle 18 platzierbar oder an die Träufelzelle 18 übergeben werden kann, ist die Spanndornwechselschnittstelle der Spindel zu betätigen. In der Träufelzelle 18 übernimmt eine integrierte Rotationseinheit einen drehenden Antrieb des Spanndorn-E-Maschinen-Bauteil-Pakets, insbesondere des Spanndorn-Stator-Pakets.

Nach dem Träufeln der E-Maschinen-Bauteile, insbesondere der Statoren, ist das E-Maschinen-Bauteil-Spanndorn-Übergabesystem des Greifersystems 12 dazu eingerichtet, das Spanndorn-E-Maschinen-Bauteil-Paket, insbesondere das Spanndorn-Stator-Paket, bevorzugt rotierend, aus der Träufelzelle 18 zu entnehmen. Damit die Spindel wieder den Spanndorn mit dem daran angeordneten E-Maschinen-Bauteil greifen oder aufnehmen oder halten kann, ist die Spanndornwechselschnittstelle der Spindel zu betätigen.

Anschließend übergibt das E-Maschinen-Bauteil-Spanndorn-Übergabesystem 12 das Spanndorn-E-Maschinen-Bauteil-Paket, insbesondere das Spanndorn-Stator-Paket, an den Ofen 20. Bevorzugt erfolgt rotierend das Handling des Spanndorn-E-Maschinen-Bauteil-Pakets, insbesondere des Spanndorn-Stator-Pakets, zum Ofen 20. Bevorzugt wird das Spanndorn-E-Maschinen-Bauteil-Paket, insbesondere das Spanndorn-Stator-Paket, durch eine erneute Betätigung der Spanndornwechselschnittstelle der Spindel rotierend an den Ofen 20 übergeben. Der Ofen 20 ist dazu eingerichtet, die E-Maschinen-Bauteile, insbesondere die Statoren, zu gelieren. Insbesondere ist der Ofen 20 dazu eingerichtet, das Harz der mit dem Harz imprägnierten E-Maschinen-Bauteile auszuhärten. Im Ofen 20 übernimmt eine integrierte Rotationseinheit einen drehenden Antrieb des Spanndorn-E-Maschinen-Bauteil-Pakets, insbesondere des Spanndorn-Stator-Pakets.

Nach dem Gelieren des Harzes ist das Greifersystem 12 mit dem E-Maschinen-Bauteil-Spanndorn-Übergabesystem dazu eingerichtet, das Spanndorn-E-Maschinen-Bauteil-Paket, insbesondere das Spanndorn-Stator-Paket, aus dem Ofen 20 zu holen oder zu entnehmen. Zum oder beim Ankoppeln des E-Maschinen-Bauteils an die Spindel ist die Spanndornwechselschnittstelle der Spindel zu betätigen. Vom Ofen 20 erfolgt ein Transport des Spanndorn-E-Maschinen-Bauteil-Pakets, insbesondere der Spanndorn- Stator-Pakets, zurück auf das Band 14. Durch eine Betätigung des Spannmoduls, insbesondere im Spanndorn oder am Spanndorn, wird die Spannung des Spannmoduls, welches das E-Maschinen-Bauteil hält, gelöst oder gelockert. Das E-Maschinen-Bauteil, insbesondere der Stator, wird hierdurch auf dem Band 14 abgesetzt oder abgelegt.

In einem darauffolgenden Arbeitsschritt ist das Greifersystem 12 dazu eingerichtet, den Spanndorn durch eine Betätigung der Spanndornwechselschnittstelle der Spindel in dem Puffer 16 abzulegen. Pro E-Maschinen-Bauteil, insbesondere Stator, und/oder pro Zyklus wird die Spanndornwechselschnittstelle sechsmal und das Spannmodul im oder am Spanndorn zweimal betätigt.

Im Zusammenhang der Figuren Fig. 2 bis Fig. 8 wird im Folgenden das E-Maschinen-Bauteil-Spanndorn-Übergabesystem 22 genauer erläutert.

In den Figuren Fig. 2 bis Fig. 6 ist eine Spindel 24 des E-Maschinen-Bauteil-Spanndorn-Übergabesystems 22 dargestellt. Die Spindel 24 weist eine Spanndornwechselschnittstelle 26 auf. Die Spanndornwechselschnittstelle 26 ist an einem Ende oder Endbereich der Spindel 24 angeordnet. Die Spanndornwechselschnittstelle 26 ist insbesondere als eine HSK-Schnittstelle ausgebildet.

Die Spindel 24 ist dazu eingerichtet, einen Spanndorn (in Figuren Fig. 2 bis Fig. 6 nicht dargestellt) über die Spanndornwechselschnittstelle 26 aufzunehmen und/oder zu halten oder zu lagern. Mit anderen Worten kann über die Spanndornwechselschnittstelle 26 der Spanndorn in der Spindel 24 angeordnet oder in die Spindel 24 eingeführt und wieder aus dieser entnommen werden. Zum Halten oder Lagern des Spanndorns in der Spindel 24 ist die Spanndornwechselschnittstelle 26 zu spannen. Zum Herausnehmen oder Entfernen des Spanndorns aus der Spindel 24 ist die Spanndornwechselschnittstelle 26 zu lösen oder zu öffnen. Zum Betätigen der Spanndornwechselschnittstelle 26, insbesondere zum Lösen und/oder zum Spannen der Spanndornwechselschnittstelle 26, weist die Spindel 24 eine Spanneinheit auf. Die Spanneinheit umfasst einen ersten Zylinder 28, einen Einbauspanner 30, ein erstes Koppelelement 32 und eine Schaltscheibe 34. Zum Lösen und/oder zum Spannen der Spanndornwechselschnittstelle arbeiten oder wirken der ersten Zylinder 28, der Einbauspanner 30, das erste Koppelelement 32 und die Schaltscheibe 34 zusammen. Das erste Koppelement 32 ist dabei als ein Lager, insbesondere ein Axial-Nadellager, ausgebildet.

Zum Wechseln des Spanndorns wird zum Betätigen der Spanndornwechselschnittstelle 26 der erste Zylinder 28 axial innerhalb der Spindel 24 bewegt. Hierzu weist die Spindel 24 oder das E-Maschinen-Bauteil-Spanndorn-Übergabesystem 22 eine erste Betätigungseinrichtung auf. Die erste Betätigungseinrichtung ist dazu eingerichtet, zum axialen Bewegen des ersten Zylinders 28 den ersten Zylinder 28 mit einer Kraft oder einem Druck, insbesondere einer Druckkraft, zu beaufschlagen. Dabei ist die erste Betätigungseinrichtung dazu eingerichtet, den ersten Zylinder 28 axial in Richtung der Spanndornwechselschnittstelle 26, insbesondere von einer Spanndornspannposition in eine Spanndornwechselposition, und/oder axial von der Spanndornwechselschnittstelle 26 weg, insbesondere von der Spanndornwechselposition in die Spanndornspannposition, zu bewegen oder zu verlagern.

Durch die axiale Bewegung des ersten Zylinders 28 ist die Spanneinheit dazu eingerichtet, die Spanndornwechselschnittstelle 26 zum Wechseln des in der Spanndornwechselschnittstelle 26 angeordneten Spanndorns zu lösen. Zusätzlich oder alternativ ist durch die axiale Bewegung des ersten Zylinders 28 die Spanneinheit dazu eingerichtet, zum Spannen des in der Spanndornwechselschnittstelle 26 angeordneten Spanndorns die Spanndornwechselschnittstelle 26 zu spannen.

Zum Lösen und/oder zum Spannen der Spanndornwechselschnittstelle 26 wirkt das erste Koppelelement 32, also das Axial-Nadellager, mit der Schaltscheibe 34 zusammen.

Beim Lösen wird der erste Zylinder 28 durch die erste Betätigungseinrichtung derart mit einem Druck beaufschlagt, dass der erste Zylinder 28 in Richtung der Spanndornwechselschnittstelle 26 von der Spanndornspannposition in die Spanndornwechselposition bewegt wird. Mit anderen Worten wird der erste Zylinder 28 rückseitig mit einem Druck beaufschlagt. Hierdurch wird der erste Zylinder 28 in eine vordere Endlage bewegt. Die Bewegung des ersten Zylinders 28 kann auch als Zylinderhub bezeichnet werden. Durch den Zylinderhub fährt das auf dem ersten Zylinder 28 angeordnete oder angebrachte erste Koppelelement 32, also das Axial-Nadellager, auf die an dem, insbesondere rotierenden, Einbauspanner 30 montierte oder angeordnete Schaltscheibe 34 auf. Hierdurch wird ein Federelement des Einbauspanners 30 gespannt, um die Spanndornwechselschnittstelle 26 zu lösen. Mit anderen Worten erfolgt das Lösen der Spanndornwechselschnittstelle 26 über den Einbauspanner 30. Das Lösen über den ersten Zylinder 28 und somit der Spanndornwechselschnittstelle 26 erfolgt dabei während einer Rotation über das auf den ersten Zylinder 28 aufgesetzte erste Koppelelement 32, also das Axial-Nadellager. Das erste Koppelelement 32 überträgt dabei eine axiale Betätigungskraft von dem, insbesondere stehenden, ersten Zylinder 28 auf die Schaltscheibe 34. Die Schaltscheibe 34 ist dabei auf der, insbesondere rotierenden, Spindelwelle 36 angeordnet. Die Spanndornwechselschnittstelle 26 wird gelöst und der Spanndorn kann gewechselt werden.

Beim Spannen wird der erste Zylinder 28 durch die erste Betätigungseinrichtung derart mit einem Druck beaufschlagt, dass der erste Zylinder 28 von der Spanndornwechselschnittstelle 26 weg von der Spanndornwechselposition in die Spanndornspannposition bewegt wird. Mit anderen Worten wird der erste Zylinder 28 frontseitig mit Druck beaufschlagt und fährt in seine hintere Endlage zurück. Hierbei bewirkt das Federelement im Einbauspanner 30, insbesondere das Federpaket im Einbauspanner 30, eine auf die Spanndornwechselschnittstelle 26 wirkende Spannkraft. Dabei wird das erste Koppelelement 32, also das Axial-Nadellager, von der Schaltscheibe 34 abgehoben, wodurch das Federelement des Einbauspanners 30 eine Kraft zum Spannen der Spanndornwechselschnittstelle 26 auf die Spanndornwechselschnittstelle 26 ausübt.

Die Schaltscheibe 34 ist an der Spindelwelle 36 der Spindel 24 angeordnet, wobei ein formschlüssiges Antriebsmittel zum Drehen der Spindelwelle 36 bei einer Betätigung der Spanndornwechselschnittstelle 26 vorgesehen ist. Das formschlüssige Antriebsmittel kann als ein Zahnriemen ausgebildet sein.

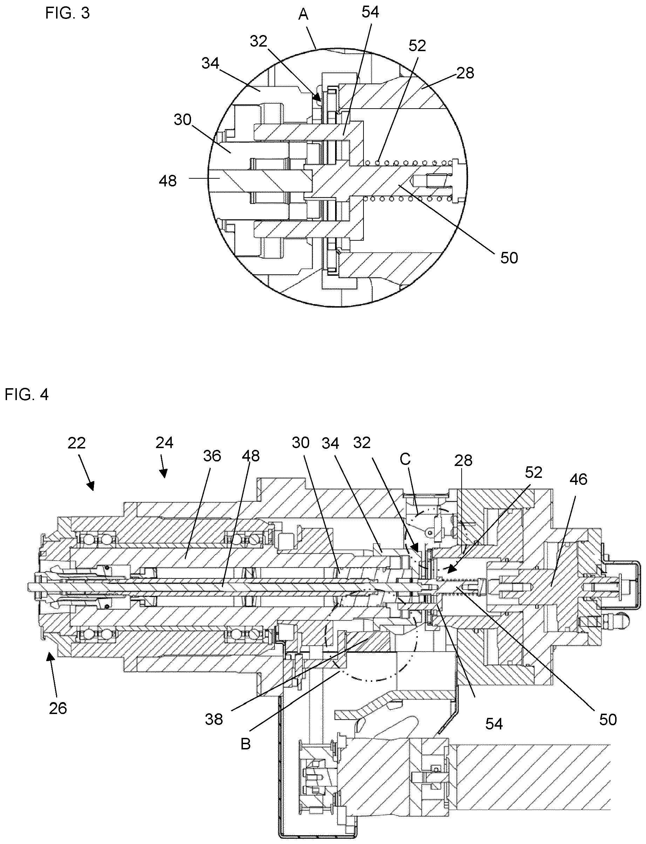

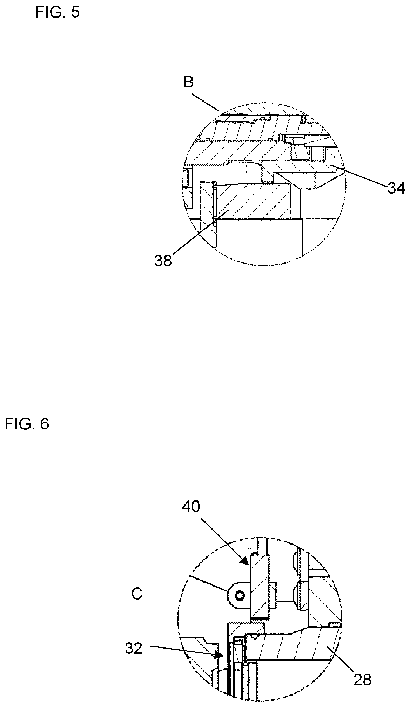

Ferner weist das E-Maschinen-Bauteil-Spanndorn-Übergabesystem 22 eine erste Erfassungseinrichtung auf, welche einen Sensor 38 umfasst. Der Sensor 38 ist dazu eingerichtet, eine Position der Schaltscheibe 34 zu erfassen. Mit anderen Worten detektiert der Sensor 38 die Position der Schaltscheibe 34. Über den Sensor 38 kann, beispielsweise durch eine Steuereinrichtung oder die Erfassungseinrichtung, die Position der Schaltscheibe 34 abgefragt werden. Ist beispielsweise der Spanndorn aus der Spanndornwechselschnittstelle 26 gelöst, so kann durch den Sensor 38 eine "Gelöst-Position" abgefragt oder erfasst werden. Ferner kann über den Sensor 38, wenn der Spanndorn in der Spanndornwechselschnittstelle 26 gespannt ist, eine "Gespannt-mit-Spanndorn-Position" oder, wenn kein Spanndorn in der Spanndornwechselschnittstelle 26 gespannt ist, eine "Gespannt-ohne-Spanndorn-Position" abgefragt oder erfasst werden. Ferner kann die erste Erfassungseinrichtung oder die Steuereinrichtung zusätzlich dazu eingerichtet sein, eine Spannposition des Einbauspanners 30 abzufragen. Der Sensor 38 sowie die Schaltscheibe 34, welche zu dem Sensor 38 positioniert ist, ist in Fig. 4 und in Fig. 5 in einer Detailansicht im Ausschnitt B gezeigt.

Des Weiteren weist die Erfassungseinrichtung einen Schalter 40 auf, welcher dazu eingerichtet ist, eine Position des ersten Zylinders 28 zu erfassen. Dabei ist der Schalter 40 dazu eingerichtet, den ersten Zylinder 28 in der Spanndornwechselposition und/oder in der Spanndornspannposition zu erfassen. Insbesondere ist der Schalter 40 als ein Näherungsschalter oder Annäherungssensor ausgebildet. Der Schalter 40 erkennt bevorzugt die hintere Endlage, also wenn sich der erste Zylinder 28 in der Spanndornspannposition befindet, in der das erste Koppelelement 32 von der Schaltscheibe 34 abgehoben ist. Der Schalter 40 sowie das erste Koppelelement 32, also das Axial-Nadellager, sind in Fig. 4 und in Fig. 6 in einer Detailansicht im Ausschnitt C gezeigt.

Neben dem Betätigen, also dem Spannen und/oder dem Lösen, der Spanndornwechselschnittstelle 26, ist die Spanneinheit des E-Maschinen-Bauteil-Spanndorn-Übergabesystems 22 dazu eingerichtet, ein Spannmodul 42 des Spanndorns 44 zum Koppeln und/oder Entkoppeln eines E-Maschinen-Bauteils (in den Figuren nicht gezeigt) mit dem Spanndorn 44 zu betätigen. Bei dem E-Maschinen-Bauteil handelt es sich insbesondere um einen Stator einer elektrischen Maschine.

Hierzu umfasst das E-Maschinen-Bauteil-Spanndorn-Übergabesystem 22 eine zweite Betätigungseinrichtung, einen zweiten Zylinder 46, ein zweites Koppelelement 48, einen Rückhalt 50, eine Druckfeder 52 und ein Joch 54. Der erste Zylinder 28 ist dabei zwischen der Spanndornwechselschnittstelle 26 und dem zweiten Zylinder 46 angeordnet. Das zweite Koppelelement 48 verläuft zentrisch durch die Spanndornwechselschnittstelle 26. Die Druckfeder 52 ist dabei an dem Joch 54, in welchem das zweite Koppelelement 48 zumindest teilweise, also vollständig oder teilweise, aufgenommen ist, angeordnet. Die Spindelwelle 36 umgibt das zweite Koppelelement 48.

Zum Betätigen des Spannmoduls 42 des Spanndorns 44 ist die zweite Betätigungseinrichtung dazu eingerichtet, den zweiten Zylinder 46 axial in der Spindel 24 zu bewegen. Durch die axiale Bewegung des zweiten Zylinders 46 wirkt der zweite Zylinder 46 mit dem zweiten Koppelelement 48 zum Spannen und/oder Lösen des Spannmoduls 42 des Spanndorns 44 zusammen.

Die Betätigung des Spannmoduls 42 im oder am Spanndorn 44, also insbesondere das Aufbringen einer Spannung auf den Spanndorn 44, erfolgt über das zweite Koppelelement 48. Das zweite Koppelelement 48 ist dabei als eine Druckstange ausgebildet. Insbesondere erfolgt eine Betätigung des Spannmoduls 42 im oder am Spanndorn 44 über den zweiten Zylinder 46 über eine zentrisch durch die Spanndornwechselschnittstelle 26 verlaufende Druckstange. Bevorzugt erfolgt die Betätigung des Spannmoduls 42 stehend. Insbesondere wird das auf dem Spannmodul 42 angeordnete E-Maschinen-Bauteil stehend abgesetzt. Ferner ist das zweite Koppelelement 48 von der Spindelwelle 36, insbesondere radial, umgeben.

Zum Lösen des Spannmoduls 42 wird der zweite Zylinder 46 betätigt. Hierbei wird der zweite Zylinder 46 von der zweiten Betätigungseinrichtung mit einer Kraft, insbesondere einer Druckkraft, derart beaufschlagt, dass der zweite Zylinder 46 in Richtung der Spanndornwechselschnittstelle 26 von einer Spannmodulspannposition in eine Spannmodulwechselposition zum Lösen des Spannmoduls 42 zum Entkoppeln des E-Maschinen-Bauteils axial bewegt wird. Die Spanneinheit weist hierzu einen Rückhalt 50, insbesondere einen Druckstangenrückhalt, auf, welcher dazu eingerichtet ist, das zweite Koppelelement 48 zu lagern. Bei der Bewegung des zweiten Zylinders 46 von der Spannmodulspannposition in die Spannmodulwechselposition fährt der zweite Zylinder 46 auf eine Schraube des Rückhalts für eine Federvorspannung des Rückhalts 50 auf und betätigt so das zweite Koppelelement 48. Das zweite Koppelelement 48 wiederum betätigt ein Federelement 58 im Spannmodul 42 des Spanndorns 44 und löst oder entkoppelt so das E-Maschinen-Bauteil.

Zum Spannen des Spannmoduls 42 wird der zweite Zylinder 46 derart mit einer Kraft, insbesondere einer Druckkraft, beaufschlagt, dass der zweite Zylinder 46 von der Spanndornwechselschnittstelle 26 weg von der Spannmodulwechselposition in die Spannmodulspannposition bewegt wird. Insbesondere wird der zweite Zylinder 46 frontseitig mit einem Druck beaufschlagt und fährt in die hintere Endlage der Spindel 24. Dabei ist die Druckfeder 52 dazu eingerichtet, das zweite Koppelelement 48 bei der axialen Bewegung des zweiten Zylinders 46 von der Spanndornwechselschnittstelle 26 weg von der Spannmodulwechselposition in die Spannmodulspannposition axial in die Bewegungsrichtung des zweiten Zylinders 46 zu bewegen, um das Spannmodul 42 zum Koppeln des E-Maschinen-Bauteils mit dem Spanndorn 44 zu spannen. Insbesondere wird die Druckstange über die Druckfeder 52, welche auf einem, insbesondere mitrotierenden Joch montiert ist, nach hinten in die Spindel 24 gezogen. Ist der zweite Zylinder 46 nicht betätigt oder befindet sich der zweite Zylinder 46 in der Spannmodulspannposition, wird die Druckstange, also das zweite Koppelelement 48, durch eine auf dem Joch 54, insbesondere mitrotierenden Joch sitzende Druckfeder 52 in der Spindel 24 gehalten.

Fig. 3 zeigt in einem vergrößerten Ausschnitt A den ersten Zylinder 28, den Einbauspanner 30, das erste Koppelelement 32, die Schaltscheibe 34, das zweite Koppelelement 48, die Druckfeder 52 und das Joch 54.

Ferner weist das E-Maschinen-Bauteil-Spanndorn-Übergabesystem 22 eine zweite Erfassungseinrichtung auf, welche einen zweiten Schalter 60 umfasst. Der zweite Schalter 60 ist dazu eingerichtet, eine Position des zweiten Zylinders 46 zu erfassen. Insbesondere ist der zweite Schalter 60 dazu eingerichtet, den zweiten Zylinder 46 in der Spannmodulspannposition und/oder in der Spannmodulwechselposition zu erfassen oder zu detektieren. Insbesondere ist der zweite Schalter 60 als ein Näherungsschalter oder Annäherungssensor ausgebildet. Bevorzugt erkennt der zweite Schalter 60 die hintere Endlage des zweiten Zylinders 46, in der insbesondere der stehende zweite Zylinder 46 von einem rotierenden Teil, bevorzugt dem Rückhalt 50, abgehoben ist. Dabei kann die Position des zweiten Zylinders 46 von der zweiten Erfassungseinrichtung von der Steuereinrichtung abgefragt werden.

Ohne Mitnehmernuten ist ein Spannen des Spanndorns 44 in jeder Winkelposition möglich. Die Drehmomentübertragung erfolgt, insbesondere ausschließlich oder nur, über eine Kegel- und/oder Anlagefläche.

Das E-Maschinen-Bauteil-Spanndorn-Übergabesystem 22 ist insbesondere aus einem den Spanndorn 44 rotierenden und einem die Spanndornwechselschnittstelle 26 sowie das Spannmodul 42 im oder am Spanndorn 44 betätigenden, stehenden Teil gebildet. Dem rotierenden Teil werden insbesondere alle an der Spindelwelle 36 montierten E-Maschinen-Bauteile bis zur Schaltscheibe 34 und die Schraube für die Federvorspannung des Rückhalts 50 zugeordnet. Die Rotation erfolgt über ein formschlüssiges Antriebsmittel, insbesondere einen Zahnriemen, der von einem Servermotor angetrieben wird. Dem stehenden Teil werden alle Gehäuseteile und die daran fest montierten E-Maschinen-Bauteile sowie der erste Zylinder 28 und der zweite Zylinder 46 und die daran montierten E-Maschinen-Bauteile zugeordnet. Eine Betätigung des ersten Zylinders 28 führt zum Lösen der Spanndornwechselschnittstelle 26 und somit zum Lösen des Spanndorns 44. Eine Betätigung des zweiten Zylinders 46 führt zum Lösen des Spannmoduls 42 im Spanndorn 44 und somit zum Lösen des E-Maschinen-Bauteils.

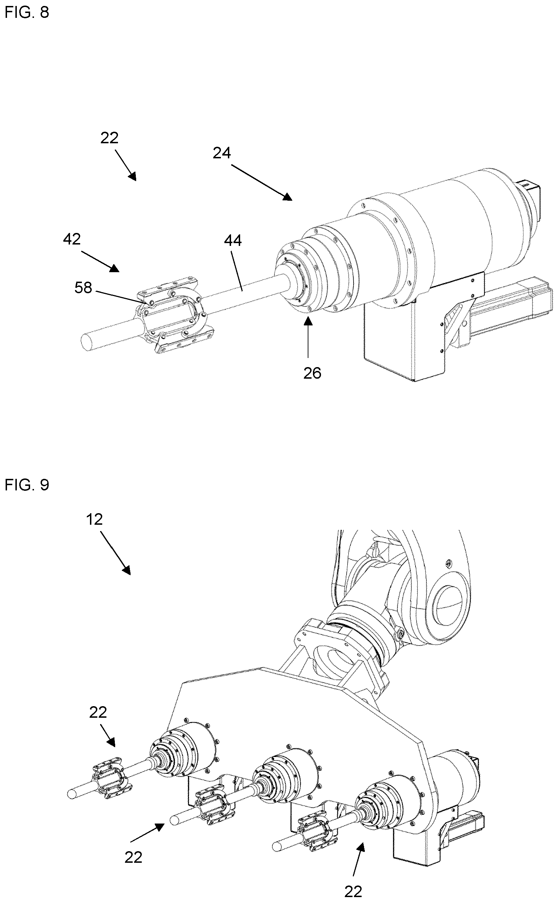

Fig. 9 zeigt ein Greifersystem 12, welches insbesondere einen Roboter mit drei daran angeordneten E-Maschinen-Bauteil-Spanndorn-Übergabesystemen 22 aufweist. Hierdurch ist das Greifersystem 12 dazu eingerichtet, drei E-Maschinen-Bauteile gleichzeitig aufzunehmen und/oder handzuhaben. Insbesondere ist das Greifersystem 12 für ein gleichzeitiges Handling (eine gleichzeitige Handhabung) von drei Statoren ausgebildet.

Insgesamt ist durch die Erfindung ein E-Maschinen-Bauteil-Spanndorn-Übergabesystem für eine rotierende Übergabe von Spanndornen und/oder Statoren beschrieben.

Das flexible Greifersystem holt einen Spanndorn aus dem Puffer. Zur Aufnahme der Spanndorne muss die Spanndornwechselschnittstelle betätigt werden. Danach holt das flexible Greifersystem die Statoren vom Band. Hierzu muss zunächst das Statorspannmodul oder das Spannmodul im Spanndorn betätigt werden. Im betätigten Zustand fährt der Spanndorn in den Stator ein. Durch Wegnahme der Betätigung des Statorspannmoduls im Spanndorn wird der Stator auf dem Spanndorn gespannt. Nun transportiert das flexible Greifersystem das Spanndorn-Stator-Paket in die Träufelzelle und übergibt das gesamte Paket. Hierzu muss die Spanndornwechselschnittstelle betätigt werden. In der Träufelzelle übernimmt eine integrierte Rotationseinheit den drehenden Antrieb des Spanndorn-Stator-Pakets. Nach dem Träufeln der Statoren holt das flexible Greifersystem das Spanndorn-Stator-Paket rotierend aus der Träufelzelle. Hierzu muss die Spanndornwechselschnittstelle wiederum betätigt werden. Rotierend erfolgt das Handling des Spanndorn-Stator-Pakets zum Ofen, in welchem es in der Folge durch Betätigung der Spanndornwechselschnittstelle rotierend übergeben wird. Im Ofen übernimmt eine integrierte Rotationseinheit den drehenden Antrieb des Spanndorn-Stator-Pakets. Nach dem Gelieren des Harzes holt das flexible Greifersystem das Spanndorn-Stator-Paket aus dem Ofen. Beim Ankuppeln des Stators muss die Spanndornwechselschnittstelle betätigt werden. Vom Ofen erfolgt der Transport des Spanndorn-Stator-Pakets zurück auf das Band. Durch Betätigung des Statorspannmoduls im Spanndorn wird die Statorspannung gelöst. Der Stator wird auf dem Band abgesetzt. Danach legt das flexible Greifersystem den Spanndorn wiederum durch Betätigung der Spanndornwechselschnittstelle im Puffer ab. Pro Stator und pro Zyklus wird die Spanndornwechselschnittstelle also sechs Mal und das Statorspannmodul im Spanndorn zwei Mal betätigt.

Das E-Maschinen-Bauteil-Spanndorn-Übergabesystem umfasst zwei Betätigungszylinder: ein erster Zylinder für die Betätigung der Spanndornwechselschnittstelle (Spanndornspannung) über den Einbauspanner und ein zweiter Zylinder für die Betätigung des Statorspannmoduls im Spanndorn (Statorspannung auf Spanndorn) über die Druckstange. Die Betätigung über den ersten Zylinder und somit der Spanndornwechselschnittstelle erfolgt während der Rotation über ein auf den ersten Zylinder aufgesetztes Axial-Nadellager. Dieses überträgt die axiale Betätigungskraft vom stehenden ersten Zylinder auf die Schaltscheibe der rotierenden Spindelwelle. Eine Betätigung von dem ersten Zylinder führt zum Lösen der Spanndornwechselschnittstelle. Die Betätigung über den zweiten Zylinder und somit des Statorspannmoduls im Spanndorn erfolgt stehend, wobei der Stator stehend auf dem Werkstückträger abgesetzt werden soll, über eine zentrisch durch die Spanndornwechselschnittstelle verlaufende Druckstange. Eine Betätigung von dem zweiten Zylinder führt zum Lösen des Statorspannmoduls im Spanndorn. Ist der zweite Zylinder nicht betätigt oder befindet er sich in der hinteren Endlage, wird die Druckstange durch eine auf einem mitrotierenden Joch sitzende Druckfeder in der Spindel gehalten.

Um Geräuschemission und Verschleiß während der Rotation zu minimieren, sind der Betätigungszylinder der Spanndornwechselschnittstelle, also der erste Zylinder, von der Gegenlauffläche des Axial-Nadellagers sowie der Betätigungszylinder des Statorspannmoduls, also der zweite Zylinder, im Spanndorn von der Gegenfläche der Druckstange im gespannten Zustand abgehoben. Um den sicheren Spannzustand zu ermitteln werden die hintere Endlage von dem ersten Zylinder, die hintere Endlage von dem zweiten Zylinder sowie die IST-Spannposition des Einbauspanners abgefragt.

Die Spanndornwechselschnittstelle ist als modifizierte HSK-Schnittstelle ausgeführt. Bei einer Ausgestaltung ist die HSK-Schnittstelle derart modifiziert, dass Mitnehmernuten weggelassen werden. Ohne Mitnehmernuten ist ein Spannen des Spanndorns in jeder Winkelposition möglich. Die Drehmomentübertragung erfolgt über die Kegel- und Anlagefläche. Bei einer anderen, derzeit bevorzugten Ausgestaltung ist die HSK-Schnittstelle derart modifiziert, dass die Drehmomentübertragung ausschließlich über die Plananlagenfläche der Schnittstelle erfolgt. Hierzu wurde eine HSK-Schnittstelle derart modifiziert, dass kein Kegelkonus vorhanden ist und auch keine Mitnehmernuten vorhanden sind, die verbleibenden Merkmale der normierten HSK-Schnittstelle aber beibehalten wurden.

Damit können Spanndorne mit auf ihnen gespannten Statoren mittels eines flexiblen Handlingssystems taktzeitvariabel durch die Anlage transportiert werden. Dies ermöglicht die zeitparallele Fertigung mehrerer unterschiedlicher Statortypen. Kleinere Statortypen (mit geringerer Gelierzeit) können parallel zu größeren Statortypen (mit höherer Gelierzeit) gefertigt werden, da sie zeitflexibel früher aus dem Gelierofen geholt werden können. Voraussetzung hierfür ist insbesondere die rotierende Übergabe von Spanndornen. Durch die Funktionstrennung in rotierende Teile für die Spanndornrotation und stehende Teile für die Betätigung der beiden Spannstellen Spanndornwechselschnittstelle und Statorspannmodul im Spanndorn kann der sichere Spannzustand des Spanndorns und des Stators stehend abgefragt werden. Aufgrund der kompakten und modularen Bauweise kann das E-Maschinen-Bauteil-Spanndorn-Übergabesystem optional mehrmals nebeneinander auf dem Handlingssystem angebracht werden.

Das E-Maschinen-Bauteil-Spanndorn-Übergabesystem besteht aus einem den Spanndorn rotierenden und einem die Spanndornwechselschnittstelle sowie das Spannmodul im Spanndorn betätigenden, stehenden Teil. Dem rotierenden Teil werden zugeordnet: alle an der Spindelwelle montierten E-Maschinen-Bauteile bis zur Schaltscheibe und Schraube für die Federvorspannung des Druckstangenrückhalts. Die Rotation erfolgt über einen Zahnriemen, der von einem Servomotor angetrieben wird. Dem stehenden Teil werden zugeordnet: alle Gehäuseteile und die daran fest montierten E-Maschinen-Bauteile sowie die beiden Zylinder, also der erste Zylinder und der zweite Zylinder, und die daran montierten E-Maschinen-Bauteile.

Eine Betätigung von dem ersten Zylinder führt zum Lösen der Spanndornwechselschnittstelle und somit zum Lösen des Spanndorns. Eine Betätigung von dem zweiten Zylinder führt zum Lösen des Spannmoduls im Spanndorn und somit zum Lösen des Stators. Der genaue Ablauf wird im Folgenden beschrieben:
Zum Lösen der Spanndornwechselschnittstelle wird der erste Zylinder rückseitig mit Druck beaufschlagt. Durch den Zylinderhub fährt das auf dem ersten Zylinder angebrachte Axial-Nadellager auf die am rotierenden Einbauspanner montierte Schaltscheibe auf und löst so das Federpaket des Einbauspanners. Die Spanndornwechselschnittstelle wird gelöst. Der Spanndorn kann gewechselt werden. Über einen Sensor, der die Position der Schaltscheibe detektiert, kann die "Gelöst-Position" abgefragt werden.

Zum Spannen der Spanndornwechselschnittstelle wird der erste Zylinder frontseitig mit Druck beaufschlagt und fährt in seine hintere Endlage zurück. Das Federpaket im Einbauspanner bewirkt eine auf die Spanndornwechselschnittstelle wirkende Spannkraft. Falls vorhanden, wird der Spanndorn gespannt. Über einen Sensor, der die Position der Schaltscheibe detektiert, kann die "Gespannt-mit-Spanndorn-Position" oder die "Gespannt-ohne-Spanndorn-Position" abgefragt werden. Ein Näherungsschalter erkennt die hintere Endlage von dem ersten Zylinder in der das Axial-Nadellager von der Schaltscheibe sicher abgehoben ist. Somit ist die Vermeidung von Geräuschemissionen und Verschleiß während der Rotation gewährleistet.

Zum Lösen des Statorspannmoduls im Spanndorn wird der zweite Zylinder rückseitig mit Druck beaufschlagt und fährt auf die Schraube für die Federvorspannung des Druckstangenrückhalts und betätigt so die Druckstange. Diese wiederum betätigt das Federpaket im Spannmodul des Spanndorns und löst so den Stator.

Zum Spannen des Statorspannmoduls im Spanndorn wird der zweite Zylinder frontseitig mit Druck beaufschlagt und fährt in die hintere Endlage. Das Federpaket im Spannmodul des Spanndorns bewirkt eine auf den Stator wirkende Spannkraft. Falls vorhanden, wird der Stator gespannt. Die Druckstange wird über die Druckfeder, welche auf einem mitrotierenden Joch montiert ist, nach hinten, in die Spindel, gezogen. Ein Näherungsschalter erkennt die hintere Endlage von dem zweiten Zylinder in der der stehende Zylinder vom rotierenden Teil sicher abgehoben ist. Somit ist die Vermeidung von Geräuschemissionen und Verschleiß während der Rotation gewährleistet.

### Bezugszeichenliste:

- 10: E-Maschinen-Bauteil-Imprägniervorrichtung
- 12: Greifersystem
- 14: Band
- 16: Puffer
- 18: Träufelzelle
- 20: Ofen
- 22: E-Maschinen-Bauteil-Spanndorn-Übergabesystem
- 24: Spindel
- 26: Spanndornwechselschnittstelle
- 28: erster Zylinder
- 30: Einbauspanner
- 32: erstes Koppelelement
- 34: Schaltscheibe
- 36: Spindelwelle
- 38: Sensor
- 40: Schalter
- 42: Spannmodul
- 44: Spanndorn
- 46: zweiter Zylinder
- 48: zweites Koppelelement
- 50: Rückhalt
- 52: Druckfeder
- 54: Joch
- 58: Federelement
- 60: zweiter Schalter

## Patentansprüche

1. E-Maschinen-Bauteil-Spanndorn-Übergabesystem (22) zum rotierenden Übergeben eines Spanndorns (44), an dem ein E-Maschinen-Bauteil um eine Drehachse rotierend festspannbar ist, umfassend:
eine Spindel (24), welche eine um eine Drehachse mittels eines form- oder reibschlüssigen Antriebsmittels drehend antreibbare Spindelwelle (36) und eine Spanndornwechselschnittstelle (26) aufweist, wobei die Spanndornwechselschnittstelle (26) dazu eingerichtet ist, den Spanndorn (44) aufzunehmen,
eine Spanneinheit, welche dazu eingerichtet ist, die Spanndornwechselschnittstelle (26) zu betätigen, eine erste Betätigungseinrichtung, welche dazu eingerichtet ist, einen ersten Zylinder (28) der Spanneinheit axial in der Spindel (24) zu bewegen,
wobei durch die axiale Bewegung des ersten Zylinders (28) die Spanneinheit dazu eingerichtet ist, die Spanndornwechselschnittstelle (26) zum Wechseln des in der Spanndornwechselschnittstelle (26) angeordneten Spanndorns (44) zu lösen und dazu eingerichtet ist, die Spanndornwechselschnittstelle (26) zum Spannen des in der Spanndornwechselschnittstelle (26) angeordneten Spanndorns (44) zu spannen,
wobei die Spanneinheit ferner ein als Lager ausgebildetes erstes Koppelelement (32), welches an dem ersten Zylinder (28) angeordnet ist, und eine an der Spindelwelle (36) angeordnete Schaltscheibe (34) aufweist, wobei das erste Koppelelement (32) zum Lösen und zum Spannen der Spanndornwechselschnittstelle (26) mit der Schaltscheibe (34) zusammenwirkt, wobei das Antriebsmittel dazu vorgesehen ist, die Spindelwelle (36) bei einer Betätigung der Spanndornwechselschnittstelle (26) zu drehen, wobei die Spanneinheit einen Einbauspanner (30) umfasst, wobei bei der axialen Bewegung des ersten Zylinders (28) die Schaltscheibe (34), welche an dem Einbauspanner (30) angeordnet ist, auf ein Federelement des Einbauspanners (30) zum Lösen und zum Spannen der Spanndornwechselschnittstelle (26) einwirkt.

2. E-Maschinen-Bauteil-Spanndorn-Übergabesystem (22) nach Anspruch 1, **dadurch gekennzeichnet, dass** das erste Koppelelement (32) bei der axialen Bewegung des ersten Zylinders (28) in Richtung der Spanndornwechselschnittstelle (26) von einer Spanndornspannposition in eine Spanndornwechselposition zum Lösen der Spanndornwechselschnittstelle (26) auf der Schaltscheibe(34) anordenbar ist, wodurch das erste Koppelelement (32) dazu eingerichtet ist, das Federelement des Einbauspanners (30) zu spannen, um die Spanndornwechselschnittstelle zu lösen.

3. E-Maschinen-Bauteil-Spanndorn-Übergabesystem (22) nach Anspruch 1 oder 2, **dadurch gekennzeichnet, dass** das erste Koppelelement (32) bei der axialen Bewegung des ersten Zylinders (28) von der Spanndornwechselschnittstelle (26) weg von der Spanndornwechselposition in die Spanndornspannposition zum Spannen der Spanndornwechselschnittstelle (26) von der Schaltscheibe (34) abhebbar ist, wodurch das Federelement des Einbauspanners (30) dazu eingerichtet ist, eine Kraft zum Spannen der Spanndornwechselschnittstelle (26) auf die Spanndornwechselschnittstelle (26) auszuüben.

4. E-Maschinen-Bauteil-Spanndorn-Übergabesystem (22) nach einem der vorhergehenden Ansprüche, **dadurch gekennzeichnet**,
4.1 dass das erste Koppelelement (32) als ein Axial-Nadellager ausgebildet ist und/oder
4.2 dass die Spanndornwechselschnittstelle (26) eine derart modifizierte HSK-Schnittstelle ist, dass die Mitnehmernuten oder die Mitnehmernuten und der Kegelkonus weggelassen sind.

5. E-Maschinen-Bauteil-Spanndorn-Übergabesystem (22) nach einem der vorhergehenden Ansprüche, **dadurch gekennzeichnet, dass** das E-Maschinen-Bauteil-Spanndorn-Übergabesystem (22) eine erste Erfassungseinrichtung aufweist, welche
5.1 einen Sensor (38) umfasst, welcher dazu eingerichtet ist, eine Position der Schaltscheibe (34) zu erfassen und/oder
5.2 einen Schalter (40), insbesondere einen Näherungsschalter, umfasst, wobei der Schalter (40) dazu eingerichtet ist, eine Position des ersten Zylinders (28), insbesondere in der Spanndornwechselposition und/oder der Spanndornspannposition, zu erfassen.

6. E-Maschinen-Bauteil-Spanndorn-Übergabesystem (22) nach einem der vorhergehenden Ansprüche, **dadurch gekennzeichnet, dass** die Spanneinheit ferner dazu eingerichtet ist, ein Spannmodul (42) des Spanndorns (44) zum Koppeln oder Entkoppeln eines E-Maschinen-Bauteils mit dem Spanndorn (44) zu betätigen, wobei das E-Maschinen-Bauteil-Spanndorn-Übergabesystem (22) eine zweite Betätigungseinrichtung umfasst, welche dazu eingerichtet ist, einen zweiten Zylinder (46) axial in der Spindel (24) zum Betätigen des Spannmoduls (42) des Spanndorns (44) zu bewegen, wobei durch die axiale Bewegung des zweiten Zylinders (46) der zweite Zylinder (46) mit einem zweiten Koppelelement (48) zum Spannen und/oder Lösen des Spannmoduls (42) des Spanndorns (44) zusammenwirkt.

7. E-Maschinen-Bauteil-Spanndorn-Übergabesystem (22) nach Anspruch 6, **dadurch gekennzeichnet, dass** der erste Zylinder (28) zwischen der Spanndornwechselschnittstelle (26) und dem zweiten Zylinder (46) angeordnet ist.

8. E-Maschinen-Bauteil-Spanndorn-Übergabesystem (22) nach Anspruch 6 oder 7, **dadurch gekennzeichnet**,
8.1 dass die Spanneinheit einen Rückhalt (50), welcher dazu eingerichtet ist, das zweite Koppelelement (48) zu lagern, aufweist, wobei der Rückhalt (50) eine Schraube umfasst, wobei bei der axialen Bewegung des zweiten Zylinders (46) in Richtung der Spanndornwechselschnittstelle (26) von einer Spannmodulspannposition in eine Spannmodulwechselposition zum Lösen des Spannmoduls (42) zum Entkoppeln des E-Maschinen-Bauteils der zweite Zylinder (46) mit der Schraube koppelbar ist, wodurch das zweite Koppelelement (48) dazu eingerichtet ist, ein zweites Federelement, welches dazu eingerichtet ist, das Spannmodul (42) zu spannen, zu lösen und/oder
8.2 dass die Spanneinheit ferner eine Druckfeder (52) aufweist, welche dazu eingerichtet ist, das zweite Koppelement (48) bei der axialen Bewegung des zweiten Zylinders (46) von der Spanndornwechselschnittstelle (26) weg von der Spannmodulwechselposition in die Spannmodulspannposition axial in die Bewegungsrichtung des zweiten Zylinders (46) zu bewegen, um das Spannmodul (42) zum Koppeln des E-Maschinen-Bauteils mit dem Spanndorn (44) zu spannen.

9. E-Maschinen-Bauteil-Spanndorn-Übergabesystem (22) nach Anspruch 8, **dadurch gekennzeichnet, dass** die Druckfeder (52) an einem Joch (54), in welchem das zweite Koppelelement (48) zumindest teilweise aufgenommen ist, angeordnet ist.

10. E-Maschinen-Bauteil-Spanndorn-Übergabesystem (22) nach einem der Ansprüche 6 bis 9, **dadurch gekennzeichnet, dass** das zweite Koppelement (48) als eine Druckstange ausgebildet ist, welche zentrisch durch die Spanndornwechselschnittstelle (26) verläuft.

11. E-Maschinen-Bauteil-Spanndorn-Übergabesystem (22) nach einem der Ansprüche 6 bis 10, **dadurch gekennzeichnet, dass** das E-Maschinen-Bauteil-Spanndorn-Übergabesystem (22) eine zweite Erfassungseinrichtung aufweist, welche
11.1 einen zweiten Schalter (60), welcher insbesondere als ein Näherungsschalter ausgebildet ist, umfasst, wobei der zweite Schalter (60) dazu eingerichtet ist, eine Position des zweiten Zylinders (46), insbesondere in der Spannmodulspannposition und/oder der Spannmodulwechselposition zu erfassen; und/oder
11.2 einen zweiten Sensor umfasst, wobei der zweite Sensor dazu eingerichtet ist, eine Winkelposition des mit dem Spanndorn (44) gekoppelten E-Maschinen-Bauteils, insbesondere durch Erfassen eines Schaltelements des E-Maschinen-Bauteils, zu bestimmen.

12. E-Maschinen-Bauteil-Spanndorn-Übergabesystem (22) nach einem der Ansprüche 6 bis 11, **dadurch gekennzeichnet, dass** die Spanneinheit ein an dem zweiten Zylinder (46) angeordnetes zweites Lager, welches insbesondere als ein Axial-Nadellager ausgebildet ist, umfasst, wobei bei einer Betätigung des Spannmoduls (42) das zweite Koppelelement (48) mittels des zweiten Lagers rotierbar ist.

13. Anordnung, umfassend ein E-Maschinen-Bauteil-Spanndorn-Übergabesystem (22) nach einem der voranstehenden Ansprüche und wenigstens einen Spanndorn (44) zum Festspannen eines Stators.

14. E-Maschinen-Bauteil-Imprägniervorrichtung (10) zum Imprägnieren eines E-Maschinen-Bauteils einer elektrischen Maschine mit einem Imprägnierharz, umfassend ein E-Maschinen-Bauteil-Spanndorn-Übergabesystem (22) nach einem der Ansprüche 1-12.

## Claims

1. E-machine component mandrel transfer system (22) for rotational transfer of a mandrel (44) to which an E-machine component can be clamped in a rotating manner about a rotational axis, comprising:
a spindle (24), which has a spindle shaft (36) that can be rotationally driven about an axis of rotation by means of a form-fitting or friction-fitting drive means, and a mandrel change interface (26), the mandrel change interface (26) being adapted to receive the mandrel (44),
a clamping unit adapted to actuate the mandrel change interface (26),
a first actuating device adapted to move a first cylinder (28) of the clamping unit axially in the spindle (24),
wherein by the axial movement of the first cylinder (28), the clamping unit is adapted to release the mandrel change interface (26) for changing the mandrel (44) arranged in the mandrel change interface (26), and is adapted to clamp the mandrel change interface (26) for clamping the mandrel (44) arranged in the mandrel change interface (26),
wherein the clamping unit further comprises a first coupling element (32) formed as a bearing and arranged on the first cylinder (28), and an indexing disk (34) arranged on the spindle shaft (36), the first coupling element (32) cooperating with the indexing disk (34) for releasing and for clamping the mandrel change interface (26), the drive means being provided to rotate the spindle shaft (36) upon actuation of the mandrel change interface (26), wherein the clamping unit comprises an installation clamp (30), wherein upon axial movement of the first cylinder (28) the switching disk (34), which is arranged on the installation clamp (30), acts on a spring element of the integral clamping unit (30) for releasing and for clamping the mandrel change interface (26).

2. E- machine component mandrel transfer system (22) according to claim 1, **characterized in that** said first coupling element (32) is positionable on said indexing disk (34) upon axial movement of said first cylinder (28) in the direction of said mandrel change interface (26) from a mandrel clamping position to a mandrel change position for releasing said mandrel change interface (26), whereby the first coupling element (32) is adapted to tension the spring element of the integral clamping unit (30) to release the mandrel change interface.

3. E- machine component mandrel transfer system (22) according to claim 1 or 2, **characterized in that** said first coupling element (32) is liftable from the indexing disk (34) upon axial movement of said first cylinder (28) away from said mandrel change interface (26) from the mandrel change position to the mandrel clamping position for clamping the mandrel change interface (26), whereby the spring element of the integral clamping unit (30) is adapted to exert a force on the mandrel change interface (26) for clamping the mandrel change interface (26).

4. E-machine component mandrel transfer system (22) according to any one of the preceding claims, **characterized in**
4.1 that the first coupling element (32) is formed as an axial needle bearing and/or
4.2 that the mandrel change interface (26) is a modified HSK interface such that the driver grooves or the driver grooves and the taper cone are omitted.

5. E-machine component mandrel transfer system (22) according to any one of the preceding claims, **characterized in that** the E-machine component mandrel transfer system (22) has a first detection device which
5.1 comprises a sensor (38) which is arranged to detect a position of the indexing disk (34), and/or
5.2 comprises a switch (40), in particular a proximity switch, the switch (40) being adapted to detect a position of the first cylinder (28), in particular in the mandrel change position and/or mandrel clamping position.

6. E-machine component mandrel transfer system (22) according to any one of the preceding claims, **characterized in that** said clamping unit is further adapted to actuate a clamping module (42) of said mandrel (44) for coupling or decoupling an electric machine component to said mandrel (44), said E-machine component mandrel transfer system (22) comprising a second actuating device adapted to move a second cylinder (46) axially in the spindle (24) for actuating the clamping module (42) of the mandrel (44), wherein the axial movement of the second cylinder (46) causes the second cylinder (46) to cooperate with a second coupling element (48) for clamping and/or releasing the clamping module (42) of the mandrel (44).

7. E- machine component mandrel transfer system (22) according to claim 6, **characterized in that** the first cylinder (28) is disposed between the mandrel change interface (26) and the second cylinder (46).

8. E-machine component mandrel transfer system (22) according to claim 6 or 7, **characterized in**
8.1. that the clamping unit comprises a retainer (50) adapted to support the second coupling element (48), the retainer (50) comprising a screw, wherein the second cylinder (46) is couplable to the screw upon axial movement of the second cylinder (46) in the direction of the mandrel change interface (26) from a clamping module clamping position to a clamping module change position for releasing the clamping module (42) for uncoupling the E-machine component, whereby the second coupling element (48) is adapted to release a second spring element adapted to tension the clamp module (42), and/or
8.2 that the clamping unit further comprises a compression spring (52) adapted to move the second coupling element (48) axially in the direction of movement of the second cylinder (46) away from the mandrel change interface (26) from the clamping module change position to the clamping module clamping position to clamp the clamping module (42) for coupling the E-machine component to the mandrel (44).

9. E- machine component mandrel transfer system (22) according to claim 8, **characterized in that** the compression spring (52) is disposed on a yoke (54) in which the second coupling element (48) is at least partially received.

10. E-machine component mandrel transfer system (22) according to any one of claims 6 to 9, **characterized in that** the second coupling element (48) is designed as a push rod which extends centrally through the mandrel change interface (26).

11. E-machine component mandrel transfer system (22) according to any one of claims 6 to 10, **characterized in that** the E-machine component mandrel transfer system (22) has a second detection device, which
11.1 comprises a second switch (60), which is designed in particular as a proximity switch, the second switch (60) being adapted to detect a position of the second cylinder (46), in particular in the clamping module clamping position and/or clamping module change position; and/or
11.2 comprises a second sensor, wherein the second sensor is adapted to determine an angular position of the E-machine component coupled to the mandrel (44), in particular by detecting a switching element of the E-machine component.

12. E-machine component mandrel transfer system (22) according to any one of claims 6 to 11, **characterized in that** the clamping unit comprises a second bearing arranged on the second cylinder (46), which second bearing is designed in particular as an axial needle bearing, the second coupling element (48) being rotatable by means of the second bearing when the clamping module (42) is actuated.

13. An assembly comprising an E-machine component mandrel transfer system (22) according to any one of the preceding claims and at least one mandrel (44) for clamping a stator.

14. E-machine component impregnation apparatus (10) for impregnating an E-machine component of an electric machine with an impregnating resin, comprising an E-machine component mandrel transfer system (22) according to any one of claims 1-12.

## Revendications

1. Système de transfert de mandrin de serrage de composant de machine électrique (22) pour le transfert rotatif d'un mandrin de serrage (44), sur lequel un composant de machine électrique peut être serré en rotation autour d'un axe de rotation, comprenant:
une broche (24), qui présente un arbre de broche (36) pouvant être entraîné en rotation autour d'un axe de rotation par un moyen d'entraînement à engagement positif ou à friction, et une interface de changement de mandrin de serrage (26), l'interface de changement de mandrin de serrage de serrage (26) étant conçue pour recevoir le mandrin de serrage (44), une unité de serrage qui est conçue pour actionner l'interface de changement de mandrin de serrage (26),
un premier dispositif d'actionnement qui est conçu pour déplacer un premier cylindre (28) de l'unité de serrage axialement dans la broche (24),
dans lequel, par le mouvement axial du premier cylindre (28), l'unité de serrage est agencée pour libérer l'interface de changement de mandrin de serrage (26) pour changer le mandrin de serrage (44) disposé dans l'interface de changement de mandrin de serrage (26), et est agencée pour serrer l'interface de changement de mandrin de serrage (26) pour serrer le mandrin de serrage (44) disposé dans l'interface de changement de mandrin de serrage (26),
l'unité de serrage présentant en outre, en tant que palier, un premier élément de couplage (32) qui est disposé sur le premier cylindre (28) et un disque d'indexation (34) disposé sur l'arbre de broche (36), le premier élément de couplage (32) coopérant avec le disque d'indexation (34) pour desserrer et pour serrer l'interface de changement de mandrin de serrage (26), le moyen d'entraînement prévu à cet effet faisant tourner l'arbre de broche (36) lors d'un actionnement de l'interface de changement de mandrin de serrage (26), l'unité de serrage comprenant une unité de serrage intégrée (30), dans lequel, lors du mouvement axial du premier cylindre (28), le disque d'indexation (34), qui est disposé sur l'unité de serrage intégrée (30), agit sur un élément de ressort de l'unité de serrage intégrée (30) pour desserrer et pour serrer l'interface de changement de mandrin de serrage (26).

2. Système de transfert de mandrin de serrage de composant de machine électrique (22) selon la revendication 1, **caractérisé en ce que** le premier élément de couplage (32) peut être disposé sur le disque d'indexation (34) lors du mouvement axial du premier cylindre (28) en direction de l'interface de changement de mandrin de serrage (26) d'une position de serrage de mandrin de serrage à une position de changement de mandrin de serrage pour desserrer l'interface de changement de mandrin de serrage (26), moyennant quoi le premier élément de couplage (32) est adapté pour tendre l'élément de ressort de l'unité de serrage intégrée (30) afin de libérer l'interface de changement de mandrin de serrage.

3. Système de transfert de mandrin de serrage de composant de machine électrique (22) selon la revendication 1 ou 2, **caractérisé en ce que** le premier élément de couplage (32), lors du mouvement axial du premier cylindre (28) s'éloignant de l'interface de changement de mandrin de serrage (26),
peut être soulevé du disque d'indexation (34), moyennant quoi l'élément de ressort de l'unité de serrage intégrée (30) est adapté pour exercer une force sur l'interface de changement de mandrin de serrage (26) pour serrer l'interface de changement de mandrin de serrage (26).

4. Système de transfert de mandrin de serrage de composant de machine électrique (22) selon l'une des revendications précédentes, **caractérisé en ce que**
4.1 que le premier élément de couplage (32) est conçu comme un roulement à aiguilles axial et/ou
4.2 que l'interface de changement de mandrin de serrage (26) est une interface HSK modifiée de telle sorte que les rainures d'entraînement ou les rainures d'entraînement et le cône tronqué sont supprimés.

5. Système de transfert de mandrin de serrage de composants de machine électrique (22) selon l'une des revendications précédentes, **caractérisé en ce que** le système de transfert de mandrin de serrage de composants de machine électrique (22) présente un premier dispositif de détection qui
5.1 comprend un capteur (38) qui est adapté pour détecter une position du disque d'indexation (34), et/ou
5.2 comprend un commutateur (40), notamment un commutateur de proximité, le commutateur (40) étant conçu pour détecter une position du premier cylindre (28), notamment dans la position de changement de mandrin de serrage et/ou dans la position de serrage du mandrin de serrage.

6. Système de transfert de mandrin de serrage de composant de machine électrique (22) selon l'une des revendications précédentes, **caractérisé en ce que** l'unité de serrage est en outre adaptée pour actionner un module de serrage (42) du mandrin de serrage (44) pour coupler ou découpler un composant de machine électrique avec le mandrin de serrage (44), le système de transfert de mandrin de serrage de composant de machine électrique (22) comprenant un deuxième dispositif d'actionnement, qui est adapté pour déplacer un deuxième cylindre (46) axialement dans la broche (24) pour actionner le module de serrage (42) du mandrin de serrage (44), dans lequel, par le mouvement axial du deuxième cylindre (46), le deuxième cylindre (46) coopère avec un deuxième élément de couplage (48) pour serrer et/ou relâcher le module de serrage (42) du mandrin de serrage (44).

7. Système de transfert de mandrin de serrage de composant de machine électrique (22) selon la revendication 6, **caractérisé en ce que** le premier cylindre (28) est disposé entre l'interface de changement de mandrin de serrage (26) et le deuxième cylindre (46).

8. Système de transfert de mandrin de serrage de composant de machine électrique (22) selon la revendication 6 ou 7, **caractérisé en ce que**,
8.1 l'unité de serrage comprend une retenue (50) adaptée pour supporter le deuxième élément de couplage (48), la retenue (50) comprenant une vis, dans laquelle, lors du mouvement axial du deuxième cylindre (46) vers l'interface de changement de mandrin de serrage (26) d'une position de serrage de module de serrage à une position de changement de module de serrage pour libérer le module de serrage (42) afin de découpler le composant de machine électrique, le deuxième cylindre (46) peut être couplé à la vis, de sorte que le deuxième élément de couplage (48) est adapté pour libérer un deuxième élément de ressort qui est adapté pour serrer le module de serrage (42), et/ou
8.2 l'unité de serrage comprend en outre un ressort de compression (52) qui est conçu pour déplacer le deuxième élément de couplage (48) axialement dans la direction de déplacement du deuxième cylindre (46) lors du déplacement axial du deuxième cylindre (46) à partir de l'interface de changement de mandrin de serrage (26), de la position de changement de module de serrage à la position de serrage de module de serrage, afin de serrer le module de serrage (42) pour coupler le composant de machine électrique au mandrin de serrage (44).

9. Système de transfert de mandrin de serrage de composant de machine électrique (22) selon la revendication 8, **caractérisé en ce que** le ressort de compression (52) est disposé sur un étrier (54) dans lequel le deuxième élément de couplage (48) est au moins partiellement logé.

10. Système de transfert de mandrin de serrage de composant de machine électrique (22) selon l'une des revendications 6 à 9, **caractérisé en ce que** le deuxième élément de couplage (48) est conçu comme une tige de pression qui s'étend de manière centrée à travers l'interface de changement de mandrin de serrage (26).

11. Système de transfert de mandrin de serrage de composant de machine électrique (22) selon l'une des revendications 6 à 10, **caractérisé en ce que** le système de transfert de mandrin de serrage de composant de machine électrique (22) comporte un deuxième dispositif de détection qui
11.1 comprend un deuxième commutateur (60), qui est notamment conçu comme un commutateur de proximité, le deuxième commutateur (60) étant conçu pour détecter une position du deuxième cylindre (46), notamment dans la position de serrage du module de serrage et/ou dans la position de changement du module de serrage; et/ou
11.2 comprend un deuxième détecteur, le deuxième détecteur étant conçu pour déterminer une position angulaire du composant de machine électrique couplé au mandrin de serrage (44), en particulier en détectant un élément de commutation du composant de machine électrique.

12. Système de transfert de mandrin de serrage de composant de machine électrique (22) selon l'une des revendications 6 à 11, **caractérisé en ce que** l'unité de serrage comprend un deuxième palier disposé sur le deuxième cylindre (46), qui est en particulier conçu comme un roulement à aiguilles axial, le deuxième élément de couplage (48) pouvant être mis en rotation au moyen du deuxième palier lors d'un actionnement du module de serrage (42).

13. Ensemble comprenant un système de transfert de mandrin de serrage de composant de machine électrique (22) selon l'une des revendications précédentes et au moins un mandrin de serrage (44) pour serrer un stator.

14. Dispositif d'imprégnation de composant de machine électrique (10) pour imprégner un composant de machine électrique d'une machine électrique avec une résine d'imprégnation, comprenant un système de transfert de mandrin de serrage de composant de machine électrique (22) selon l'une quelconque des revendications 1 à 12.
